(19) Europäisches Patentamt
European Patent Office
Office européen des brevets

(11) Numéro de publication : **0 146 868
B1**

(12) **FASCICULE DE BREVET EUROPÉEN**

(45) Date de publication du fascicule du brevet :
15.06.88

(51) Int. Cl.⁴ : **H 04 Q 11/04**

(21) Numéro de dépôt : 84115163.2

(22) Date de dépôt : 11.12.84

(54) **Dispositif de terminaux sémaphores pour le système de signalisation no. 7.**

(30) Priorité : 15.12.83 FR 8320124

(43) Date de publication de la demande :
03.07.85 Bulletin 85/27

(45) Mention de la délivrance du brevet :
15.06.88 Bulletin 88/24

(84) Etats contractants désignés :
BE CH DE FR GB IT LI NL SE

(56) Documents cités :
EP-A- 0 062 296
EP-A- 0 112 560
FR-A- 2 499 345
COMMUTATION & TRANSMISSION, vol. 5, no. 3,
septembre 1983, pages 5-24, Issy-les-Moulineaux,
FR; P. COLLET et al.: "Le système de signalisation
CCITT no. 7: Mise en oeuvre dans les autocommutateurs du réseau national"
IREVIEW OF THE ELECTRICAL COMMUNICATION
LABORATORIES, vol. 28, nos. 1-2, janvier-février
1980, pages 80-90, Tokyo, JP;I. SAITO et al.: "Signaling equipment for the new common channel signaling system" NACHRICHTEN TELEFONBAU UND
NORMALZEIT, no. 85, 1983, pages 41-52,
Frankfurt/Main, DE; H.-J. ARNDGEN et al.: "Die Realisierung des zentralen Zeichengabesystems CCITT
Nr. 7: Erster Einsatz im öffentlichen Funkfernsprechnetz der Deutschen Bundespost" COLLOQUE
INTERNATIONAL DE COMMUTATION, 21-25 septembre 1981
Montréal, session 23 B, papier 2, pages 1-8; F.
BEHAGUE et al.: "Signalisation par canal sémaphore
CCITT No. 7 et les systèmes de commutation numérique E 10 et E 12".

(73) Titulaire : **ALCATEL CIT**
**33, rue Emeriau**
**F-75015 Paris (FR)**

(72) Inventeur : **Paris, Bernard**
**Bâtiment D Résidence Park Nevez**
**F-22300 Lannion (FR)**

(74) Mandataire : **Weinmiller, Jürgen et al**
**Lennéstrasse 9 Postfach 24**
**D-8133 Feldafing (DE)**

## Description

L'invention est du domaine des télécommunications et concerne un dispositif de terminaux sémaphores d'un réseau de communications numériques utilisant le système de signalisation sémaphore n° 7 défini par le CCITT (C.f. Livre Jaune, Tome VI.6 — Avis Q701 à Q741).

La mise en œuvre des fonctions de communication nécessite le transfert d'informations entre un abonné et un commutateur, ou entre deux commutateurs ; on le réalise par un échange de signaux dits de signalisation. Si la signalisation est transmise sur le même circuit que celui qui sera utilisé pour la communication, on dit qu'il s'agit d'une signalisation voie par voie. Par contre, si l'on regroupe entre deux centres la signalisation correspondant à un faisceau de circuits, et si elle est acheminée sur un canal séparé, l'on parle de signalisation sur voie commune ou sémaphore.

Le système de signalisation CCITT n° 6 a été le premier système de signalisation de ce type a être spécifié, appliqué et testé. Mais conçu au départ pour des applications analogiques et quoique modifié pour des versions numériques, le système n° 6 a des limitations en environnement numérique (débit, longueur des messages, etc...). Aussi, pour répondre aux nouveaux besoins (réseaux numériques), le CCITT a émis une nouvelle spécification, dite système de signalisation sémaphore n° 7, applicable à des utilisations multiples, dans des réseaux spécialisés ou multiservices.

Le protocole utilisé pour la transmission est dérivé du protocole HDLC et en ce sens, s'apparente à la procédure spécifiée dans l'Avis X 25 relatif à l'interface ETTD/ETCD (équipement terminal de traitement de données/équipement de terminaison du circuit de données).

Les réalisations utilisant des terminaux sémaphores traitant des protocoles s'approchant du protocole utilisé dans le système de signalisation n° 7, et permettant le raccordement de plusieurs canaux, sont soit des réalisations câblées (multiplexage des canaux), soit des réalisations utilisant les microprocesseurs en tranche. Ceci conduit à des structures peu souples et peu modulaires et leur mise en œuvre s'avère délicate.

L'article de la revue Commutation et Transmission vol. 5, Septembre 1983, n° 3, pages 5 à 24 « Le système de signalisation CCITT n° 7. Mise en œuvre dans les autocommutateurs du réseau national » traite d'une manière générale du système de signalisation CCITT n° 7 dans divers types d'autocommutateurs temporels. Dans ces autocommutateurs l'unité de signalisation comporte plusieurs terminaux sémaphores et au moins une unité de gestion des canaux sémaphores traitant le niveau 2, et assurant la liaison avec une unité de commande traitant le niveau 3 ; il n'est pas mentionné d'échanges d'informations directs entre les terminaux sémaphores et l'unité de commande.

L'invention a pour but un dispositif de terminaux sémaphores qui fonctionne selon le système de signalisation sémaphore CCITT n° 7, qui soit souple d'emploi et modulaire. Ce but est atteint par le dispositif tel que défini par la revendication 1.

En ce qui concerne des mises en œuvre préférées de l'invention, référence est faite aux revendications secondaires.

L'invention va être décrite à l'aide d'un exemple de réalisation illustré par les figures annexées dans lesquelles

— la figure 1 représente schématiquement un dispositif de terminaux sémaphores auquel s'applique l'invention,

— la figure 2 représente un ensemble de deux terminaux sémaphores de l'invention,

— la figure 3 représente une unité de gestion de la figure 1,

— la figure 4 représente un circuit d'accès bus interne d'un terminal sémaphore de la figure 2,

— la figure 5 représente un circuit de basculement de canaux d'un terminal sémaphore de la figure 2,

— la figure 6 représente un circuit d'échange avec l'unité de gestion de la figure 2,

— la figure 7 représente une base de temps de la figure 6,

— la figure 8 représente un circuit de signaux de multiplexage de la figure 6,

— la figure 9 représente un générateur de signaux d'écriture de la figure 6,

— la figure 10 représente un circuit d'élaboration des signaux d'écriture et de lecture du circuit d'échange de la figure 6,

— la figure 11 représente un circuit de chargement de la figure 6,

— la figure 12 représente un autre circuit de chargement de la figure 6,

— la figure 13 représente un circuit générateur d'interruptions de la figure 6,

— la figure 14 représente un circuit d'accès de la figure 2,

— la figure 15 représente un module d'exploration de l'unité de gestion représentée figure 3,

— la figure 16 représente une deuxième interface de la figure 3,

— la figure 17 représente une première interface de la figure 3,

— la figure 18 représente un circuit d'interruptions de la figure 3,

— la figure 19 représente une partie (64 octets) d'une mémoire d'échanges de la figure 6.

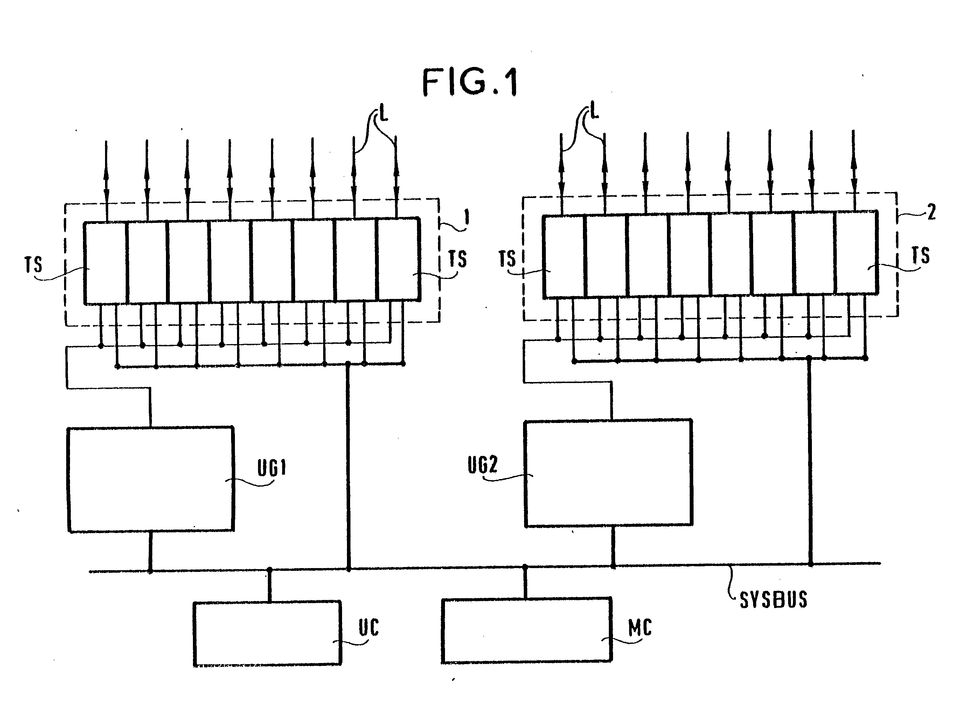

La figure 1 représente schématiquement un dispositif de terminaux sémaphores auquel s'applique l'invention, assurant les fonctions du niveau 2 du système de signalisation n° 7 du CCITT. L'équipement terminal est constitué par deux groupes de terminaux 1 et 2 et deux unités de gestion UG1 et UG2. Chaque groupe de terminaux comporte huit terminaux sémaphore TS correspondant chacun à une interface émission/réception sur une liaison L, bidirectionnelle, constituée par deux liaisons série, l'une pour le sens émission et l'autre pour le sens réception ; chaque liaison série à un débit de 64 kbit/s. Chacune des liaisons L est reliée à un réseau de connexion par l'intermédiaire d'une interface qui permet d'aiguiller vers un terminal sémaphore TS donné une voie temporelle d'une des liaisons multiplex la reliant au réseau de connexion, et de transmettre dans une voie temporelle de l'une desdites liaison multiplex un message émis par un terminal sémaphore.

Chaque unité de gestion UG1 et UG2 joue le rôle d'interlocuteur avec le niveau 3 et gère un groupe de terminaux. Chaque unité de gestion est reliée à chaque terminal TS du groupe qu'elle gère et à un bus général SYSBUS lui-même relié à une unité de commande UC et à une mémoire centrale MC ; l'unité de commande et la mémoire centrale font partie du niveau 3. Chaque terminal TS est également relié au bus général SYSBUS.

La mémoire centrale MC comprend une partie réservée à l'échange de messages qui est découpée en blocs de N octets, avec un exemple 10 octets d'enveloppe et 30 octets d'information utile par bloc. Cela permet une optimisation de l'utilisation du volume mémoire, les blocs changeant de propriétaire au fil des passations de messages, donc sans déplacement physique d'information. Un message peut être formé de plusieurs blocs disjoints chaînés entre eux.

Un terminal sémaphore TS s'occupe, pour un canal sémaphore, des traitements rapides, répétitifs, au niveau de l'octet, quel que soit le type de trame sémaphore ; on distingue en effet trois types de trames sémaphores : les trames de messages, les trames d'état et les trames de remplissage. Une unité de gestion UG gère huit terminaux sémaphores qui traitent chacun un canal sémaphore. L'unité de gestion est chargée, pour les huit canaux sémaphores, de la gestion des canaux, de la gestion des trames au niveau enveloppe de trame, et du dialogue avec le niveau 3.

Les tâches d'un terminal sémaphore sont : l'émission et la réception de trames sémaphore, la gestion des compteurs d'erreurs STEA surveillance du taux d'erreurs pendant l'alignement, et STTS surveillance du taux d'erreurs sur les trames sémaphores (terminal en service), le contrôle du numéro de séquence avant reçu NSA-R, du bit indicateur vers l'avant reçu BIA-R, et du numéro de séquence arrière reçu NSR-R, le dialogue avec l'unité de gestion.

Les tâches de l'unité de gestion sont : la supervision de l'état du canal sémaphore, la commande de l'alignement initial, la gestion des tampons d'émission et de retransmission, la gestion des procédures de retransmission, les temporisations, la gestion des blocs mémoire libres dans la mémoire centrale, le dialogue avec le niveau 3, les tests et observations.

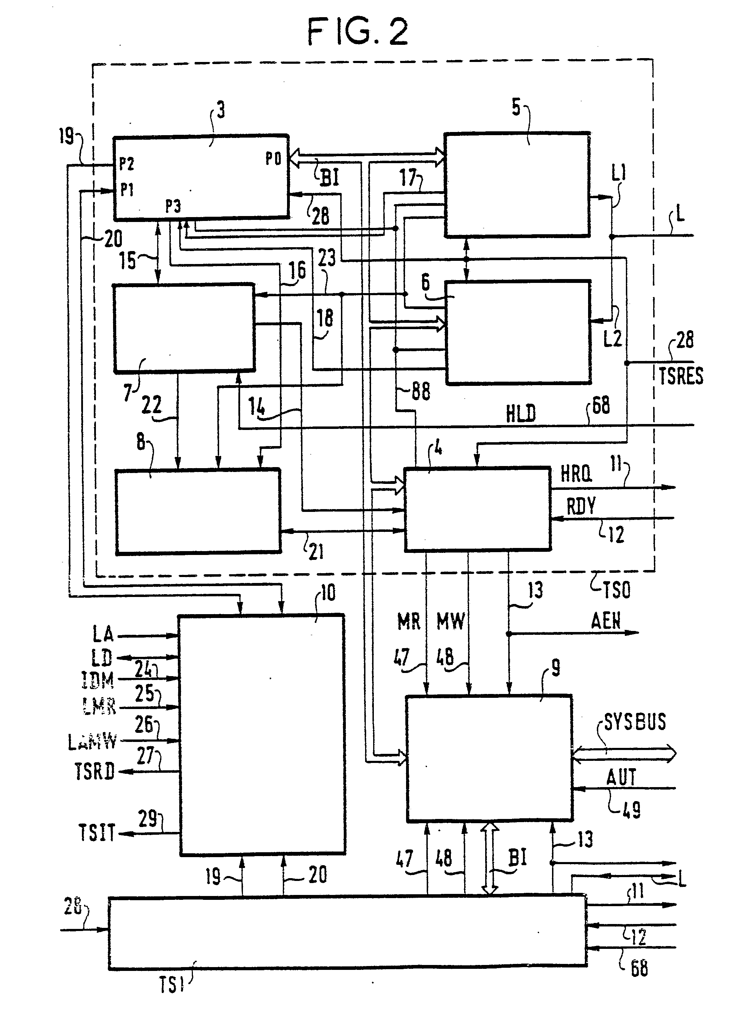

La figure 2 représente, à titre d'exemple, un ensemble constitué par deux terminaux sémaphores TS0 et TS1, un circuit d'échanges 10 et un circuit d'accès 9, un tel ensemble étant monté sur une carte de circuit imprimé. Les terminaux appartiennent à un même groupe, et seul le terminal TS0 est représenté en détail. Le circuit d'échanges et le circuit d'accès sont communs aux deux terminaux.

Chaque terminal sémaphore comprend un microcontrôleur 3, un circuit accès direct mémoire 4, un émetteur 5, un récepteur 6, un circuit accès bus interne 7 et un circuit de basculement de canaux 8. Chaque terminal est relié d'une part au circuit d'accès 9 lui-même relié au bus général SYSBUS, et d'autre part au circuit d'échanges 10 lui-même relié à l'unité de gestion qui gère les terminaux TS0 et TS1.

Dans cet exemple de réalisation les circuits d'échanges 10 et d'accès 9 sont communs à deux terminaux, c'est pourquoi ils ne sont pas inclus dans la liste des organes 3 à 8 constituant un terminal ; mais bien évidemment si ces circuits ne sont pas communs à deux terminaux, chaque terminal devra comporter un circuit d'échanges pour dialoguer avec l'unité de gestion et un circuit d'accès pour envoyer ou recevoir des informations du bus général SYSBUS.

Le microcontrôleur 3, qui est par exemple un boîtier 8751 a un premier groupe de ports P0 relié par un bus interne BI au circuit accès direct mémoire 4, à l'émetteur 5, au récepteur 6 et au circuit d'accès 9, un deuxième groupe de ports P1 relié au circuit d'échanges 10 par une ligne de données bidirectionnelle 20, un troisième groupe de ports P2 relié au circuit d'échanges 10 par une ligne d'adresses 19, et un quatrième groupe de ports P3 relié par une liaison 15 au circuit accès bus interne 7, par une liaison 16 au circuit de basculement de canaux 8, par une liaison interruption émission 17 à l'émetteur 5, par une liaison interruption réception 18 au récepteur 6, et par une liaison écriture lecture à l'émetteur 5, au récepteur 6, au circuit accès direct mémoire 4, permettant l'écriture ou la lecture du récepteur, de l'émetteur ou du circuit accès direct mémoire par le microcontrôleur, ou la lecture ou l'écriture de l'émetteur ou du récepteur par le circuit accès direct mémoire ; les groupes de ports P0 à P3 comportent chacun huit ports. Le microcontrôleur est relié à l'unité de gestion par une liaison de remise à zéro 28.

Le circuit de basculement de canaux 8 est relié au circuit accès direct mémoire 4 par une liaison 21. Le circuit accès bus interne 7 est relié au circuit de basculement de canaux 8 par une liaison 22, à l'émetteur 5, au récepteur 6 et au circuit de basculement de canaux 8 par une liaison 23, au circuit accès direct mémoire 4 par une liaison 14, et à l'unité de gestion par une liaison 68. Le circuit accès direct mémoire 4, qui est par exemple un boîtier 8237.2, est relié par des liaisons 11, 12, 13 et 28 à l'unité de gestion ; il est également relié au circuit d'accès 9 par la liaison 13, et par deux lignes 47 et 48. Le circuit d'accès 9 est relié par une ligne 49 à l'unité de gestion.

L'émetteur 5 et le récepteur 6 sont par exemple des boîtiers 8273. L'émetteur est relié en sortie à une ligne sortante L1 et le récepteur est relié en entrée à une ligne entrante L2 ; les lignes entrante et sortante L1 et L2 constituent une liaison L bidirectionnelle de la figure 1. L'émetteur et le récepteur traitent les messages à émettre ou reçus selon le protocole HDLC.

Le circuit d'échanges 10 est relié à l'unité de gestion par une ligne d'adresse LA, une ligne de données LD bidirectionnelle, et des liaisons 24, 25, 26, 27 et 29.

Chaque terminal sémaphore TS0, TS1 est relié par une liaison de remise à zéro 28 à l'unité de gestion qui délivre un signal de remise à zéro TSRES au microcontrôleur 3, à l'émetteur 5, au récepteur 6 et au circuit accès direct mémoire 4.

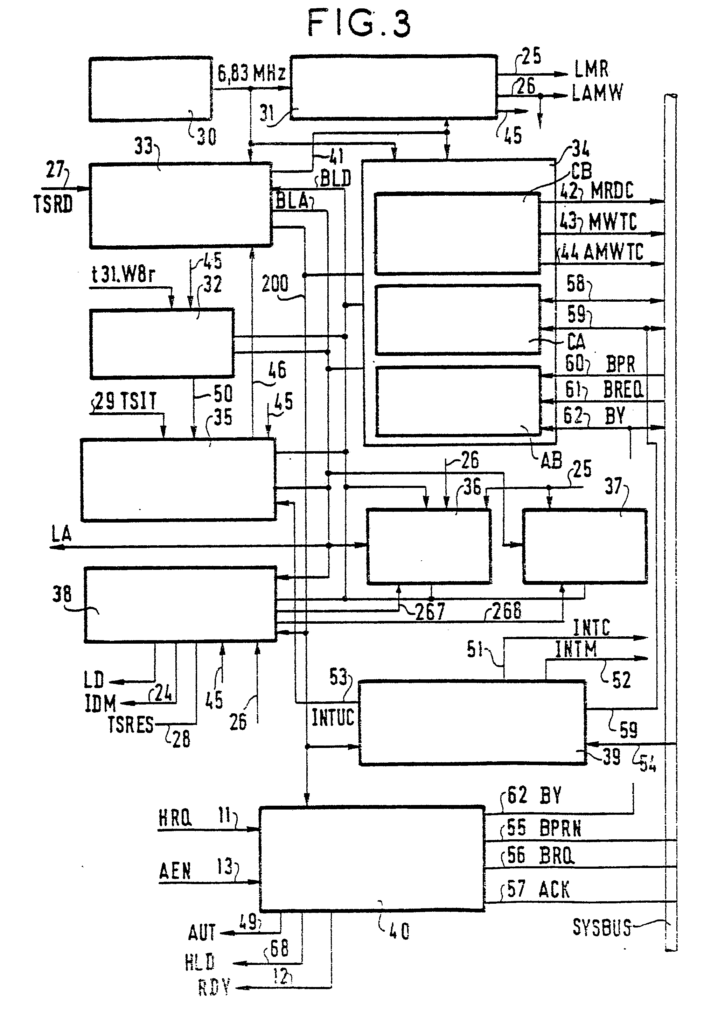

La figure 3 représente une unité de gestion, de la figure 1, qui comprend une horloge 30, un contrôleur de bus local 31, un bloc de compteurs programmables 32, un microprocesseur 33, une première interface 34, un contrôleur d'interruptions 35, une mémoire vive 36, une mémoire morte 37, une deuxième interface 38, un circuit d'interruptions 39 et un module d'exploration 40.

L'horloge 30, qui est par exemple un boîtier générateur de signaux d'horloge 8284 A, délivre un signal d'horloge à 6,83 MHz au contrôleur de bus local 31, au microprocesseur 33 et à la première interface 34.

Le microprocesseur 33, qui est par exemple un boîtier 8086-2 est relié par un bus local de données BLD bidirectionnel à la première interface 34, à la mémoire morte 37, à la mémoire vive 36, au bloc de compteurs 32, au contrôleur d'interruptions 35 et à la deuxième interface 38 ; il est relié par un bus local d'adresses BLA à la première interface 34, à la deuxième interface 38, à la mémoire vive 36, à la mémoire morte 37, au bloc de compteurs 32, au contrôleur d'interruptions 35 et à la ligne d'adresses LA qui relie l'unité de gestion aux terminaux sémaphores ; le microprocesseur est également relié par un fil de remise à zéro 200 au module d'exploration 40, à la première interface 34, à la deuxième interface 38, au circuit d'interruptions 39, et par la liaison terminal prêt 27 au circuit d'échanges 10, figure 2 qui délivre un signal terminal prêt TSRD.

Une liaison d'état 41 relie le microprocesseur 33, le contrôleur de bus local 31 et la première interface 34, entre eux. Le contrôleur de bus local est par exemple un boîtier 8288.

La première interface 34 est constituée par un circuit d'accès CA, un contrôleur de bus CB qui est par exemple un boîtier 8288, et un arbitre de bus AB qui est par exemple un boîtier 8289. Le contrôleur de bus CB est relié au bus général SYSBUS par trois liaisons 42, 43, 44. L'arbitre de bus AB est relié au bus général SYSBUS par trois liaisons 60, 61, 62, la liaison 62 étant bidirectionnelle. Le circuit d'accès CA est relié au bus général SYSBUS par une liaison de données 58 et une liaison d'adresses 59.

Le contrôleur de bus local 31 est relié par les liaisons 25 et 26 au circuit d'échanges 10 de la figure 2, par la liaison 26 et une ligne de signal d'écriture 45 à la deuxième interface 38, au bloc de compteurs et au contrôleur d'interruptions 35 par la ligne 45, à la mémoire vive 36 et à la mémoire morte 37 par la liaison 25, et à la mémoire vive 36 par la liaison 26.

Le bloc de compteurs 32, qui est par exemple un boîtier 8253 comporte trois compteurs programmables ; il reçoit un signal d'horloge t31 w 8 r, et est relié en sortie par une liaison 50 au contrôleur d'interruptions 35 qui est un boîtier 8259A relié par la liaison 29 au circuit d'échanges 10 de la figure 2, et par une ligne 46 au microprocesseur 33.

La mémoire morte 37 a une capacité de 8 000 mots de 16 bits et la mémoire vive 36 à une capacité de 2 000 mots de 16 bits.

La deuxième interface 38 est reliée au circuit d'échanges 10 de la figure 2 par la ligne de données LD et la liaison 24, à la mémoire vive 36 par un fil 267 et à la mémoire morte 37 par un fil 268, et aux terminaux sémaphores par la liaison 28.

Le circuit d'interruptions 39 est relié au bus général SYSBUS par la liaison 59, à l'unité de commande UC du niveau 3 par deux liaisons 51, 52, au contrôleur d'interruptions 35 par une liaison 53, au bus général SYSBUS par la liaison 54 et au fil 200.

Le module d'exploration 40 est relié aux terminaux TS par les liaisons 11, 12, 13, 68, et la ligne 49 ; il est relié au bus général SYSBUS par des liaisons 55, 56, 57, et la liaison 62.

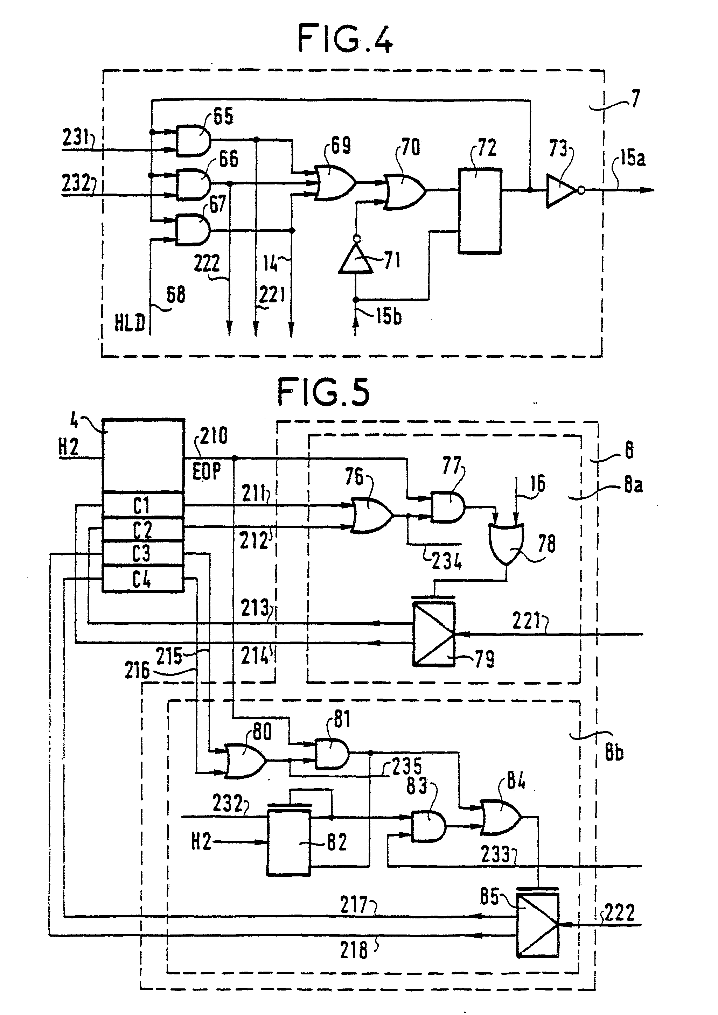

La figure 4 représente le circuit accès bus interne 7 de la figure 2.

Une porte ET 65 a une entrée reliée à l'émetteur 5 par le fil 231 et une porte ET 66 a une entrée reliée au récepteur 6 par le fil 232 ; les fils 231 et 232 font partie de la liaison 23 de la figure 2, et les portes ET 65 et 66 reçoivent respectivement une demande de transfert émission et une demande de transfert réception par les fils 231, 232. Une porte ET 67 a une entrée reliée à la liaison 68 par laquelle elle reçoit de l'unité de gestion (figure 3) un signal d'acquittement HLD suite à une demande de transfert du circuit accès direct mémoire 4. La sortie de la porte ET 65 est reliée d'une part à une entrée d'une porte OU 69 et d'autre part à un fil 221 ; la sortie de la porte ET 66 est reliée d'une part à une autre entrée de la porte OU 69 et d'autre part à un fil 222 ; les fils 221 et 222 constituent la liaison 22 de la figure 2. La sortie de la porte ET 67 est reliée d'une part à une autre entrée de la porte OU 69 et d'autre part à la liaison 14. La sortie de la porte OU 69 est reliée à une entrée d'une porte OU 70 dont une autre entrée est reliée à travers un inverseur 71 à un fil 15b ; la sortie de la porte OU 70 est reliée à l'entrée mise à 1 d'un point mémoire 72 dont l'entrée mise à zéro est reliée au fil 15b. La sortie du point mémoire 72 est reliée d'une part à une entrée des portes ET 65, 66, 67, et d'autre part à un fil 15a à travers un inverseur 73. Les fils 15a et 15b constituent la liaison 15 de la figure 2, le fil 15a étant relié au port 0 et le fil 15b au port 1 du quatrième groupe de ports P3 du microcontrôleur 3. Le microcontrôleur 3, ne possède pas de fonction maintien (HOLD), c'est-à-dire que, lorsqu'il y a transfert par le circuit accès direct mémoire 4 sur le bus interne BI, le circuit accès direct mémoire ne peut inhiber l'action du microcontrôleur. Le circuit accès bus interne 7 permet de régler ces conflits. A chaque fois que le microcontrôleur doit accéder au bus interne il en fait la demande par le fil 15b ; il attend le positionnement à 1 de son port 0 relié au fil 15a pour accéder au bus interne, ce positionnement signifiant qu'aucune demande n'émane de l'émetteur 5 ou du récepteur 6 ; dès que le microcontrôleur a accès au bus interne les portes ET 65, 66, 67 sont bloquées de sorte que l'émetteur ou le récepteur ne peuvent transmettre une demande de transfert au circuit accès direct mémoire 4.

En l'absence de demande de bus interne BI par le microcontrôleur 3, une demande de transfert émise par l'émetteur 5 sur le fil 231 est acheminée par le fil 221 vers le circuit de basculement des canaux 8, et une demande de transfert émise par le récepteur 6 sur le fil 232 est acheminée par le fil 222 vers le circuit de basculement des canaux 8.

La figure 5 représente le circuit de basculement de canaux 8 de la figure 2, constitué par un circuit de basculement émission 8a et un circuit de basculement réception 8b ; on a également représenté dans cette figure 5 le circuit accès direct mémoire 4 qui comporte quatre canaux C1, C2, C3, C4.

Dans le circuit 8a une porte OU 76 est reliée en entrée à la sortie des canaux C1 et C2 par des fils 211 et 212 ; une porte ET 77 a une entrée reliée par le fil 210 a une sortie du circuit accès mémoire 4 qui délivre un signal fin d'opération (EOP), et une autre entrée reliée à la sortie de la porte OU 76. Une porte OU 78 a une entrée reliée à la sortie de la porte ET 77 et une autre entrée reliée, par la liaison 16, au microcontrôleur 3 duquel elle reçoit un signal d'écriture ; la sortie de la porte OU 78 est reliée à une entrée de commande d'un démultiplexeur 79 relié en entrée au fil 221 de la figure 4 ; une sortie du démultiplexeur est reliée par un fil 213 à l'entrée du canal C2 et une autre sortie est reliée par un fil 214 à l'entrée du canal C1. La sortie de la porte OU 76 est également reliée à l'émetteur 5 par un fil 234 qui transmet un signal d'acquittement fin de transfert.

Dans le circuit 8b, une porte OU 80 est reliée en entrée à la sortie des canaux C3 et C4 par des fils 215 et 216 ; une porte ET 81 a une entrée reliée au fil 210 et une autre entrée reliée à la sortie de la porte OU 80. Un point mémoire 82 est relié en entrée, par le fil 232, au circuit réception 6, et l'entrée horloge reçoit un signal d'horloge H2 qui est le même que celui qui est délivré au circuit accès direct mémoire 4 ; l'entrée de remise à zéro est reliée à la sortie de la porte ET 81, et la sortie est reliée à une entrée d'une porte ET 83 dont une autre entrée est reliée par un fil 233 au circuit réception 6 et en reçoit un signal d'interruption lorsque la réception d'un message est terminée et si sa longueur est différente d'un multiple de 30 octets ; une porte OU 84 est reliée à la sortie des portes ET 81 et 83, et sa sortie est reliée à une entrée de commande d'un démultiplexeur 85 relié en entrée au fil 222 de la figure 4 ; une sortie du démultiplexeur est reliée par un fil 217 à l'entrée du canal C4 et une autre sortie est reliée par un fil 218 à l'entrée du canal C3. La sortie de la porte OU 80 est également reliée au récepteur 5 par un fil 235 qui transmet un signal d'acquittement « fin de transfert au circuit accès direct mémoire ».

Les fils 210, 211, 212, 213, 214, 215, 216, 217, 218 constituent la liaison 21 de la figure 2, les fils 221, 222 constituent la liaison 22, et les fils 232, 233, 234 et 235 constituent avec le fil 231 de la figure 4 la liaison 23 de la figure 2.

Lorsque le circuit accès direct mémoire 4 délivre sur le fil 210 un signal fin d'opération EOP, ce signal indique que le nombre de transferts pour un canal a atteint le nombre maximum de transferts autorisés, ce nombre étant fixé par exemple à 30 octets. En émission, l'association des signaux émis par les canaux C1 et C2, sur les fils 211 et 212 avec le signal fin d'opération fil 210, permet d'identifier le canal qui doit basculer, ce qui permet d'aiguiller le signal de demande de transfert provenant du circuit émission, et transmis par le fil 221 du circuit accès bus interne 7 de la figure 4, vers l'entrée de l'un des canaux C1 ou C2. Le basculement qui a donc lieu après la fin d'émission d'un bloc de 30 octets peut également être commandé par le microcontrôleur 3 qui délivre alors un signal à la porte OU 78 par l'intermédiaire du fil 16. En réception l'association des signaux émis par les canaux C3 et C4 sur les fils 215, 216 avec le signal fin d'opération, fil 210, permet d'aiguiller le signal de demande de transfert provenant du circuit réception, et transmis par le fil 222 du circuit accès bus interne 7, vers l'entrée de l'un des canaux C3 ou C4. Le basculement a lieu après réception d'un bloc de 30 octets ; il a également lieu si la fin de réception d'un message est signalé par le circuit réception, fil 233, et si la longueur du message est différente d'un multiple de 30 octets, le basculement ayant déjà eu lieu si la longueur du message est un multiple de 30 octets.

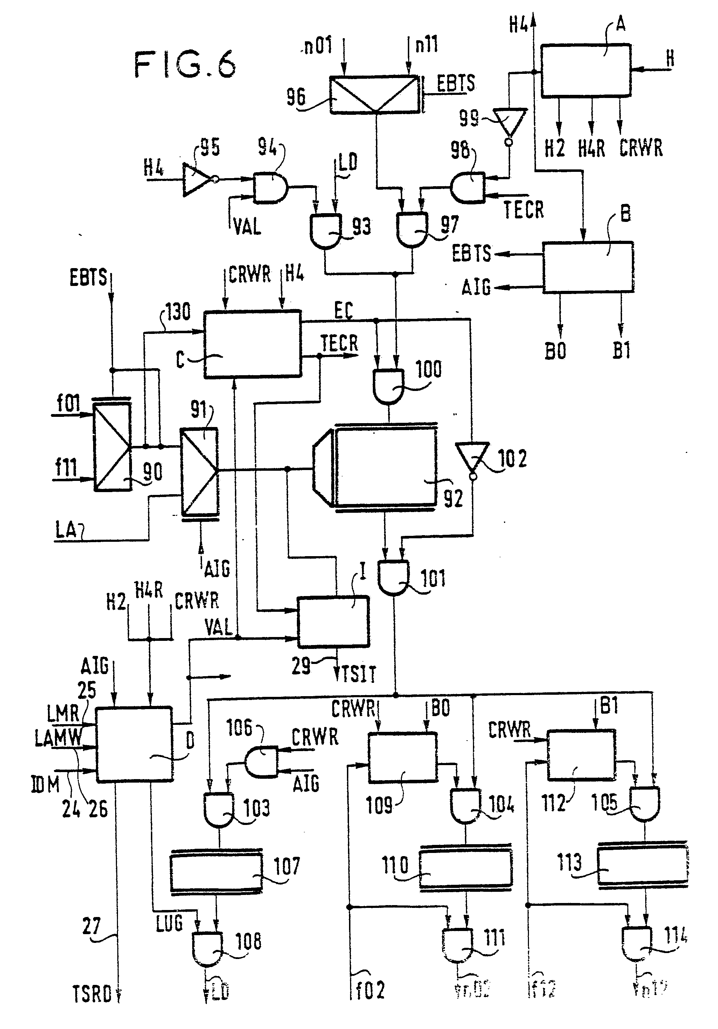

Le circuit d'échanges 10 de la figure 2 est représenté figure 6. Il comporte un circuit base de temps A, un circuit de multiplexage B, un générateur de signaux d'écriture C, un circuit d'élaboration des signaux d'écriture et de lecture D, un générateur d'interruptions I et deux circuits de chargement 109 et 112 ; tous ces circuits seront décrits plus loin. La base de temps A délivre à partir d'un signal d'horloge H à 10 MHz délivré par le central de télécommunication, des signaux de temps H2, H4, H4R et un signal d'élaboration de temps d'écriture CRWR. Le circuit de signaux de multiplexage B élabore, à partir du signal de temps H4, deux signaux de sélection EBTS et AIG, et deux signaux de commande B0 et B1. Le générateur de signaux d'écriture reçoit le signal de temps H4 et le signal d'élaboration de temps d'écriture CRWR. Le circuit d'élaboration des signaux d'écriture et de lecture D reçoit les signaux de temps H2, H4R, le signal d'élaboration de temps d'écriture CRWR et le signal de sélection AIG. Le circuit de chargement 109 reçoit le

signal de commande B0 et le signal d'élaboration de temps d'écriture CRWR, et le circuit de chargement 112 reçoit le signal de commande B1 et le signal d'élaboration de temps d'écriture CRWR.

Dans la figure 6, un multiplexeur 90 est relié en entrée par une liaison f01 au terminal sémaphore TS0 et par une liaison f11 au terminal sémaphore TS1 ; les liaisons f01 et f11 sont reliées aux ports 0 à 6 des troisièmes groupes de ports P2 des microcontrôleurs 3 des terminaux sémaphores de la figure 2 ; le signal de sélection EBTS délivré par le circuit de multiplexage B est appliqué à l'entrée de sélection du multiplexeur 90, et ce signal à la valeur 0 pour le terminal TS0 et la valeur 1 pour le terminal TS1.

Le signal EBTS est également appliqué à une entrée d'un multiplexeur 91, ladite entrée étant également reliée à la sortie du multiplexeur 90 duquel elle reçoit les six bits d'adresse 0 à 5, le septième bit étant appliqué, par un fil 130, au générateur de signaux d'écriture C ; une autre entrée du multiplexeur 91 est relié à l'unité de gestion gérant les terminaux TS0 et TS1, par la ligne d'adresses LA. Le signal de sélection AiG délivré par le circuit de multiplexage B est appliqué à l'entrée de sélection du multiplexeur 91, et ce signal a la valeur 0 pour un terminal TS0 ou TS1, et la valeur 1 pour l'unité de gestion, afin d'aiguiller vers la sortie du multiplexeur 91 soit une adresse provenant du multiplexeur 90, soit une adresse provenant de l'unité de gestion.

La sortie du multiplexeur 91 est reliée au circuit d'adressage d'une mémoire d'échanges 92, dont une partie est affectée au terminal sémaphore TS0, et une autre partie est affectée au terminal sémaphore TS1.

La ligne de données LD est reliée à une entrée d'une porte ET 93 dont une autre entrée est reliée à la sortie d'une porte ET 94 ; la porte ET 94 a une entrée qui reçoit de la base temps A un signal de temps H4 à travers un inverseur 95, et une autre entrée qui reçoit un signal de validation d'écriture VAL du circuit de temps d'écriture et de lecture D. Un multiplexeur 96, à deux entrées, est relié aux deuxièmes groupes de ports P1 des microcontrôleurs 3 des terminaux TS0 et TS1 par les liaisons n01 et n11 respectivement ; une entrée de sélection du multiplexeur 96 reçoit le signal de sélection EBTS. La sortie du multiplexeur 96 est reliée à une entrée d'une porte ET 97 dont une autre entrée est reliée à la sortie d'une porte ET 98 ; la porte ET 98 a une entrée reliée à un inverseur 99 qui reçoit le signal de temps H4 de la base de temps A, et une autre entrée qui reçoit un signal de validation d'écriture TECR du générateur de signaux d'écriture C. Les sorties des portes ET 93 et 97 sont reliées à une entrée d'une porte ET 100 dont une autre entrée reçoit un signal temps d'écriture EC du générateur de signaux d'écriture C ; la sortie de la porte ET 100 est reliée à l'entrée de la mémoire d'échanges 92.

La sortie de la mémoire d'échanges 92 est reliée à une entrée d'une porte ET 101 dont une autre entrée reçoit le signal temps d'écriture EC à travers un inverseur 102 ; la sortie de la porte ET 101 est reliée à une entrée de trois portes ET 103, 104, 105.

Une autre entrée de la porte ET 103 est reliée à la sortie d'une porte ET 106 qui reçoit sur une entrée le signal de sélection AIG et sur une autre entrée le signal d'élaboration de temps d'écriture CRWR délivré par la base de temps A ; la sortie de la porte ET 103 est reliée à l'entrée d'un registre 107. Une porte ET 108 a une entrée reliée à la sortie du registre 107 et reçoit sur une autre entrée un signal de lecture LUG du circuit de temps d'écriture et de lecture D ; la sortie de la porte ET 108 est reliée à la ligne de données LD.

La porte ET 104 a une autre entrée reliée au circuit de chargement 109 relié lui-même en entrée par une liaison f02 au huitième port du troisième groupe de ports P2 du microcontrôleur 3 du terminal sémaphore TS0 ; la sortie de la porte ET 104 est reliée à l'entrée d'un registre 110. Une porte ET 111 a une entrée reliée à la sortie du registre 110 et une autre entrée reliée à la liaison f02 ; la sortie de la porte ET 111 est reliée au deuxième groupe de ports P1 du terminal sémaphore TS0 par une liaison n02.

La porte ET 105 a une autre entrée reliée au circuit de chargement 112 relié lui-même en entrée par une liaison f12 au huitième port du troisième groupe de ports P2 du microcontrôleur 3 du terminal sémaphore TS1 ; la sortie de la porte ET 105 est reliée à l'entrée d'un registre 113. Une porte ET 114 a une entrée reliée à la sortie du registre 113 et une autre entrée reliée à la liaison f12 ; la sortie de la porte ET 114 est reliée au deuxième groupe de ports P1 du terminal sémaphore TS1 par une liaison n12.

Les liaisons f01 et f02 constituent la ligne d'adresses 19 reliant le terminal sémaphore TS0 au circuit d'échanges 10 ; de même les liaisons n01 et n02 constituent la ligne de données 20 reliant le terminal sémaphore TS0 au circuit d'échanges.

Les liaisons f11 et f12 constituent la ligne d'adresses 19 et les liaisons n11 et n12 constituent la ligne de données 20 reliant le terminal sémaphore TS1 au circuit d'échanges 10.

Le générateur d'interruptions I est relié à la sortie du multiplexeur 91 dont il reçoit les bits d'adresse 0 à 5 ; il reçoit également le signal de validation d'écriture VAL et le signal de validation d'écriture TECR ; il délivre sur la liaison interruption 29 un signal d'interruption TSIT.

La mémoire d'échanges 92 est adressée, soit par un terminal, TS0 ou TS1, soit par l'unité de gestion par la ligne d'adresses LA, le multiplexeur 91 étant commandé par le signal de sélection AIG ; la sélection du terminal se fait par le multiplexeur 90 sous commande du signal de sélection EBTS qui constitue également le bit 6 de l'adresse délivrée par le multiplexeur 90 au multiplexeur 91, ce bit 6 permettant d'adresser la partie de la mémoire d'échanges affectée au terminal sélectionné. A l'écriture de la mémoire d'échanges la sélection entre la ligne de données LD et un terminal, TS0 ou TS1, est assurée soit par le signal de validation d'écriture VAL qui valide les données venant de l'unité de gestion (porte ET 93), soit par le signal de validation d'écriture TECR qui valide les données venant d'un terminal (porte ET 97), le choix du terminal étant assuré par le multiplexeur 96 sous commande du signal de sélection EBTS. L'écriture en mémoire d'échanges est commandée par le signal temps d'écriture EC qui valide la porte ET 100 et inhibe la porte ET 101 ; la lecture de la mémoire d'échanges par la porte ET 101 est donc toujours validée sauf lors des temps d'écriture EC. Les registres 107, 110 et 113 permettent l'aiguillage des données lues dans la mémoire d'échanges vers l'unité de gestion, le terminal TS0 ou le terminal TS1, respectivement. L'écriture dans le registre 107 est commandée par le signal de sélection AIG et le signal d'élaboration de temps d'écriture CRWR, et la lecture est commandée par le signal de lecture LUG. Selon que les données lues dans la mémoire d'échanges sont destinées au terminal TS0 ou TS1, c'est le circuit de chargement 109 ou 112 qui est activé par le signal de commande B0 ou B1, pour chargement du registre correspondant 110 ou 113 ; la lecture du registre est assurée par le bit 7 venant du huitième port du troisième groupe de ports P2 du microcontrôleur 3 du terminal correspondant.

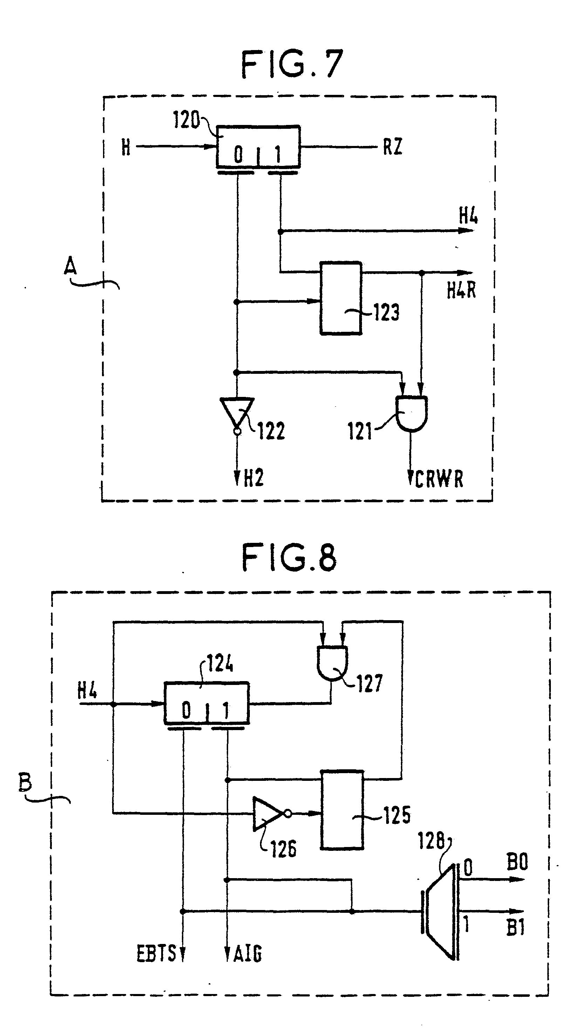

La figure 7 représente la base de temps A de la figure 6. Un compteur 120, à deux bits, reçoit le signal d'horloge H à 10 MHz ; il est remis à zéro, fil RZ, lors de la mise sous tension de l'équipement. La sortie du premier bit (bit 0) est reliée à une entrée d'une porte ET 121, à un inverseur 122 qui délivre en sortie le signal H2, et à une entrée horloge d'une bascule 123 ; la sortie du deuxième bit (bit 1) délivre le signal H4 et est reliée à l'entrée signal de la bascule 123 ; la sortie de la bascule 123 délivre le signal H4R et est reliée à une autre entrée de la porte ET 121 qui délivre le signal d'élaboration de temps d'écriture CRWR. Le signal H4R est le signal H4 retardé d'un quart de sa période. Le signal H2 sert également d'horloge pour les circuits accès direct mémoire 4 des terminaux sémaphores.

La figure 8 représente le circuit de signaux de multiplexage B de la figure 6. Un compteur 124, à deux bits, reçoit le signal de temps H4 de la base de temps A. La sortie du premier bit (bit 0) du compteur délivre le signal de sélection EBTS qui est appliqué aux multiplexeurs 90 et 96 de la figure 6 ; lorsqu'il a la valeur 0 ce signal permet d'aiguiller les adresses délivrées par le terminal TS0 vers la sortie des multiplexeurs ; lorsque ce signal a la valeur 1 il permet d'aiguiller les adresses délivrées par le terminal TS1 vers la sortie des multiplexeurs. La sortie du deuxième bit (bit 1) du compteur 124 délivre le signal de sélection AIG qui est appliqué au multiplexeur 91 et à la porte 106 de la figure 6 ; lorsqu'il a la valeur 0 ce signal permet d'aiguiller la sortie du multiplexeur 90 vers la sortie du multiplexeur 91 ; lorsqu'il a la valeur 1 ce signal permet d'aiguiller les adresses acheminées par la ligne d'adresses LA vers la sortie du multiplexeur 91. Une bascule 125 est reliée en entrée à la sortie du deuxième bit du compteur 124 et son entrée de commande reçoit à travers un inverseur 126 le signal de temps H4 ; la sortie de la bascule 125 est reliée à une entrée d'une porte ET 127 dont une autre entrée reçoit le signal de temps H4 ; la sortie de la porte ET 127 est reliée à l'entrée de remise à zéro du compteur 124. De cette manière le compteur est remis à zéro après décodage de l'état 10 du compteur et sur le front montant du signal de temps H4 qui suit ce décodage qui correspond au signal de sélection AIG ; ce compteur prend donc trois états : 00, 01, 10. Les sorties des deux bits du compteur sont reliées à un décodeur 128 qui décode les valeurs 0 et 1 désignant respectivement les terminaux sémaphores TS0 et TS1, et délivre, pour la valeur 0 le signal de commande B0 et pour la valeur 1 le signal de commande B1, ces signaux servant au pilotage des circuits de chargement 109 et 112 de la figure 6.

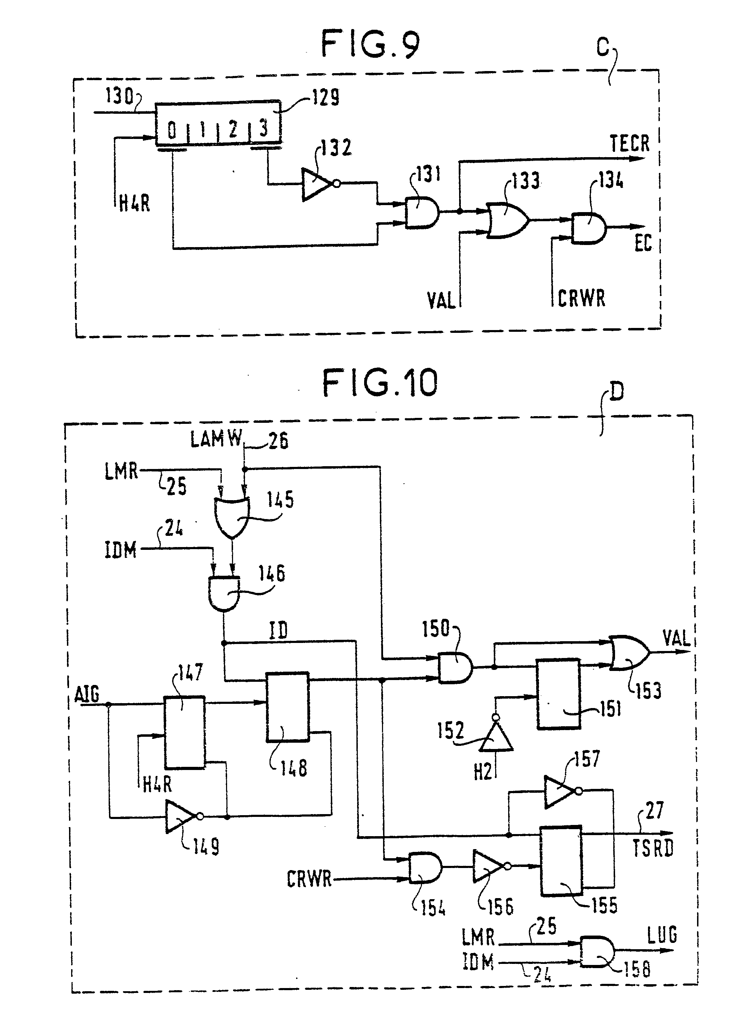

La figure 9 représente le générateur de signaux d'écriture C de la figure 6. Un registre à décalage 129 a une entrée série reliée par le fil 130 à la sortie du multiplexeur 90 ; ce fil 130 correspond au septième bit de l'adresse délivrée par le troisième groupe de ports P2 des microcontrôleurs 3 des terminaux sémaphores TS0 et TS1. L'entrée de décalage du registre reçoit le signal de temps H4R. La sortie du premier bit (bit 0) du registre est reliée à une entrée d'une porte ET 131 ; la sortie du quatrième bit (bit 3) du registre est reliée à travers un inverseur 132 à une autre entrée de la porte ET 131 dont la sortie délivre le signal de validation d'écriture TECR et est reliée à une entrée d'une porte OU 133 ; une autre entrée de la porte OU 133 reçoit le signal de validation d'écriture VAL (délivré par le circuit d'élaboration des signaux d'écriture et de lecture D de la figure 6).

La sortie de la porte OU 133 est reliée à une entrée d'une porte ET 134 dont une autre entrée reçoit le signal d'élaboration de temps d'écriture CRWR délivré par la base de temps A ; la porte ET 134 délivre le signal temps d'écriture EC.

Le générateur de signaux d'écriture C permet la détection de la transition 0 à 1 du septième bit de l'adresse délivrée par les deux terminaux sémaphores TS0 et TS1 et de délivrer le signal temps d'écriture EC dans le créneau d'accès du terminal considéré. Par exemple, sur un front du signal de temps H4 l'accès pour le terminal TS0 est validé, ce qui donne, figure 8, EBTS = 0 et B0 = 1 ; le front montant suivant du signal de temps H4R échantillonne le septième bit (fil 130) du terminal TS0 et compare sa valeur avec l'échantillonnage précédent de ce bit dans le créneau d'accès du terminal TS0. Si la combinaison 0,1 au registre (bit 0 à 1 et bit 3 à 0) est trouvée, la porte ET 131 délivre le signal de validation d'écriture TECR et le signal temps d'écriture EC est délivré par la porte ET 134. Pour l'écriture des données délivrées par l'unité de gestion, c'est le signal de validation d'écriture VAL, délivré par le circuit d'élaboration des signaux d'écriture et de lecture D, qui est transmis par la porte OU 133 à la porte ET 134 qui délivre le signal d'écriture EC.

La figure 10 représente le circuit d'élaboration des signaux d'écriture et de lecture D de la figure 6. Une porte OU 145 a une entrée reliée à la liaison de commande de lecture 25 par laquelle elle reçoit un signal de commande de lecture LMR, et une autre entrée reliée à la liaison de commande d'écriture 26 par laquelle elle reçoit un signal de commande d'écriture LAMW, les signaux de lecture et d'écriture provenant de l'unité de gestion ; une porte ET 146 a une entrée reliée à la sortie de la porte OU 145 et une autre entrée reliée à la liaison de commande de décodage 24 par laquelle elle reçoit un signal de commande de décodage IDM ; une bascule 147 reçoit en entrée le signal de sélection AIG, et sur son entrée horloge le signal de temps H4R ; une bascule 148 a son entrée signal reliée à la sortie de la porte ET 146 et son entrée horloge reliée à la sortie de la bascule 147 ; le signal de sélection AIG est appliqué à travers un inverseur 149 à l'entrée de remise à zéro de chacune des bascules 147, 148. Une porte ET 150 a une entrée reliée à la liaison 26 et une autre entrée reliée à la sortie de la bascule 148. Une bascule 151 a son entrée signal reliée à la sortie de la porte ET 150 et son entrée horloge reçoit à travers un inverseur 152 le signal de temps H2 ; une porte OU 153 a une entrée reliée à la sortie de la porte ET 150 et une autre entrée reliée à la sortie de la bascule 151 ; la porte OU 153 délivre le signal de validation d'écriture VAL au générateur de signaux d'écriture C et au générateur d'interruption I. Une porte ET 154 a une entrée reliée à la sortie de la bascule 148 et reçoit sur une autre entrée le signal d'élaboration de temps d'écriture CRWR ; une bascule 155 a son entrée signal reliée à la sortie de la porte ET 146, son entrée horloge reliée à travers un inverseur 156 à la sortie de la porte ET 154, et son entrée de remise à zéro reliée à travers un inverseur 157 à son entrée signal ; la sortie de la bascule 155 est reliée à l'unité de gestion par la liaison terminal prêt 27 sur laquelle elle délivre le signal prêt TSRD lorsque l'action sur la mémoire d'échanges 92 est validée. Une porte ET 158, à deux entrées, est reliée à l'unité de gestion par les liaisons 24 et 25 par lesquelles elle reçoit le signal de décodage IDM et le signal de lecture LMR ; la porte ET 158 délivre en sortie le signal de lecture LUG autorisant la lecture du registre 107 de la figure 6.

Le circuit d'élaboration des signaux d'écriture et de lecture D élabore des signaux de temps permettant la lecture et l'écriture de la mémoire d'échange 92 par l'unité de gestion. La détection d'écriture ou de lecture est faite par échantillonnage à partir du signal H4R dans le temps du signal de sélection AIG, lorsqu'il sélectionne l'unité de gestion, c'est-à-dire lorsqu'il a la valeur 1, comme indiqué dans la description de la figure 8. Le signal échantillonné ID est celui délivré par la porte ET 146, la bascule 148 délivrant alors un signal synchrone du signal de temps H4R. Si le signal délivré par la bascule 148, est validé par le signal de commande d'écriture LAMW (porte ET 150) cela signifie qu'il y a demande d'écriture par l'unité de gestion UG ; la porte ET 150 délivre alors le signal de validation d'écriture à la porte OU 153, la bascule 151 permettant de prolonger ce signal, le signal VAL délivré par la porte OU 153 étant appliqué au générateur de signaux d'écriture C qui délivre le signal temps d'écriture EC. S'il s'agit d'une demande de lecture par l'unité de gestion UG, la porte ET 158 délivre le signal de lecture LUG au registre 107 de la figure 6 ; ce registre est chargé dans le créneau de temps CRWR. AIG qui valide la porte ET 103, la mémoire d'échange 92 étant toujours en lecture, par la porte ET 101 excepté pendant le temps d'écriture correspondant au signal temps d'écriture EC. La bascule 155, figure 10, délivre le signal terminal prêt TSRD lorsque le signal d'élaboration de temps d'écriture CRWR retombe à zéro ; l'unité de gestion, sur réception du signal terminal prêt fait retomber à zéro le signal d'écriture ou de lecture correspondant, LAMW ou LMR, selon qu'il s'agissait d'une demande d'écriture ou de lecture, ce qui fait retomber le signal terminal prêt TSRD.

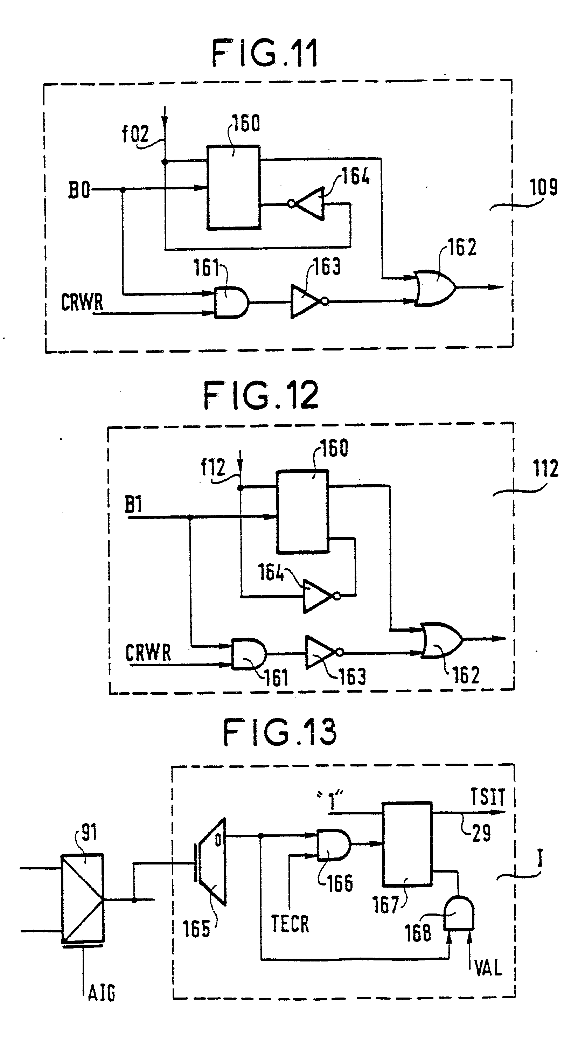

La figure 11 représente le circuit de chargement 109 de la figure 6. Une bascule 160 a son entrée signal reliée par la liaison f02 au huitième port du troisième groupe de ports P2 du microcontrôleur 3 du terminal sémaphore TS0 ; le bit délivré par le huitième port correspondant à un signal de lecture du registre 110 valide la porte ET 111 de la figure 6 ; l'entrée horloge de la bascule est reliée au circuit de signaux de multiplexage B duquel elle reçoit le signal de commande B0 ; une porte ET 161 reçoit le signal B0 sur une entrée et le signal d'élaboration de temps d'écriture CRWR sur une autre entrée ; une porte OU 162 a une entrée reliée à la sortie de la bascule 160 et une autre entrée reliée par un inverseur 163 à la sortie de la porte ET 161 ; la bascule 160 a son entrée de remise à zéro reliée par un inverseur 164 au fil f02 ; la sortie de la porte OU 162 est reliée à une entrée de la porte ET 104 de la figure 6. La porte OU 162 délivre un top de chargement lorsque le signal CRWR retombe à zéro, ceci bien entendu si le signal B0 est présent, ce signal étant relatif au terminal sémaphore TS0. Lorsque le microcontrô-leur 3 délivre un signal de lecture par le huitième port du groupe de ports P2, sur la liaison f02, pour lecture du registre 110, et si ce bit est émis dans le temps du signal B0, il est nécessaire d'inhiber le chargement du registre 110 ; c'est le signal délivré par la bascule 160 qui inhibe le chargement, la porte OU 162 ne pouvant plus alors délivrer le top de chargement à partir des signaux B0 et CRWR lorsque ce dernier retombe à zéro.

La figure 12 représente le circuit de chargement 112 de la figure 6. Ce circuit est identique à celui de la figure 11, mais l'entrée signal de la bascule 160 est reliée par la liaison f12 au huitième port du groupe de ports P2 du microcontrôleur 3 du terminal sémaphore TS1, et l'entrée horloge de la bascule 160 et une entrée de la porte ET 161 reçoivent du circuit de signaux de multiplexage B le signal de commande B1 ; la sortie de la porte OU 162 est reliée à une entrée de la porte ET 105 de la figure 6.

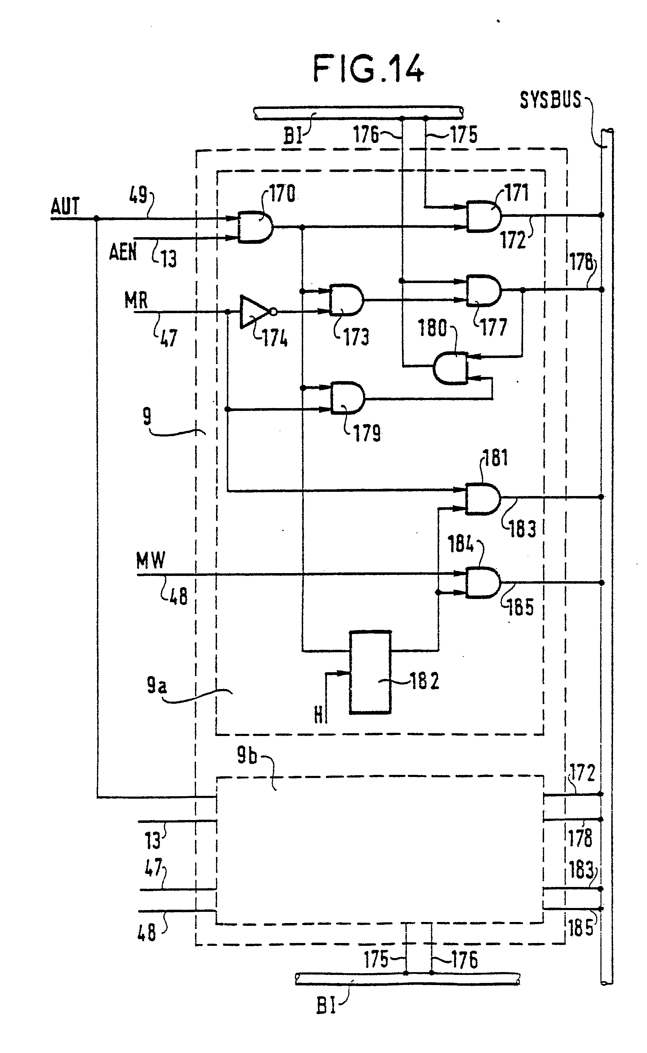

La figure 13 représente le circuit générateur d'interruptions I de la figure 6. Un décodeur 165 est relié à la sortie du multiplexeur 91 de la figure 6, duquel il reçoit les bits d'adresse 0 à 5 ; ce décodeur décode en sortie le numéro 0 qui est délivré à une entrée d'une porte ET 166 et à une entrée d'une porte ET 168. Une autre entrée de la porte ET 166 reçoit le signal de validation d'écriture TECR du générateur de signaux d'écriture C ; la bascule 167 a une entrée signal qui reçoit un signal permanent de valeur 1, une entrée horloge reliée à la sortie de la porte ET 166 et une entrée de remise à zéro RZ reliée à la sortie de la porte ET 168 qui reçoit sur une autre entrée le signal de validation d'écriture VAL du circuit de temps d'écriture et de lecture D de la figure 6. La bascule 167 délivre un signal d'interruption TSIT, sur la liaison 29, à destination de l'unité de gestion. Ce signal d'interruption est donc délivré lorsque les six bits 0 à 5 d'une adresse ont la valeur 0, cette adresse étant délivrée par un terminal sémaphore TS0 ou TS1, et ce signal retombe sur décodage de cette même adresse délivrée cette fois par l'unité de gestion. Ainsi lorsqu'un terminal doit alerter l'unité de gestion il écrit à l'adresse 0, ce qui provoque l'envoi d'une interruption vers l'unité de gestion.

La figure 14 représente le circuit d'accès 9 de la figure 2 ; le circuit d'accès comporte deux circuits identiques 9a et 9b, le circuit 9a étant affecté au terminal sémaphore TS0 et le circuit 9b étant affecté au terminal sémaphore TS1 ; seul le circuit 9a est représenté en détail, et décrit ci-après. Une porte ET 170 a une entrée reliée par la ligne 49 à l'unité de gestion qui délivre un signal d'autorisation AUT pour validation des signaux délivrés par le circuit accès direct mémoire 4 du terminal sémaphore et une autre entrée reliée par la liaison 13 au circuit accès direct mémoire 4 duquel elle reçoit un signal sortie adresses AEN. Une porte ET 171 a une entrée reliée à la sortie de la porte ET 170 et une autre entrée reliée par une liaison d'adresses 175 au bus interne BI duquel elle reçoit des adresses ; la sortie de la porte ET 171 est reliée par une ligne d'adresses 172 au bus général SYSBUS. Une porte ET 173 a une entrée reliée à la sortie de la porte ET 170 et une entrée à la sortie d'un inverseur 174 dont l'entrée est reliée par la ligne de lecture 47 au circuit accès direct mémoire 4 duquel elle reçoit un signal de lecture MR. Une porte ET 177 a une entrée reliée à la sortie de la porte ET 173 et une autre entrée reliée par une liaison de données 176 au bus interne BI duquel elle reçoit des données ; la sortie de la porte ET 177 est reliée par une ligne de données 178 au bus général SYSBUS. Une porte ET 179 a une entrée reliée à la sortie de la porte ET 170 et une autre entrée reliée à la ligne de lecture 47. Une porte ET 180 est reliée en sortie au bus interne BI par la liaison de données 176 ; elle a une entrée reliée à la ligne de données 178 et une autre entrée reliée à la sortie de la porte ET 179. Une porte ET 181 a une entrée reliée à la ligne de lecture 47 et une autre entrée reliée à la sortie d'une bascule 182 ; la sortie de la porte ET 181 est reliée par une ligne de lecture 183 au bus général SYSBUS.

Une porte ET 184 a une entrée reliée à la sortie de la bascule 182 et une autre entrée reliée par la ligne d'écriture 48 au circuit accès direct mémoire 4 duquel elle reçoit un signal d'écriture MW ; la sortie de la porte ET 184 est reliée par une ligne d'écriture 185 au bus général SYSBUS. La bascule 182 a une entrée reliée à la sortie de la porte ET 170, et son entrée horloge reçoit le signal d'horloge H.

Le circuit 9b, qui est identique au circuit 9a est également relié au fil 49 commun aux deux circuits 9a et 9b ; il est relié au circuit accès direct mémoire 4 du terminal sémaphore TS1 par la liaison 13, la ligne de lecture 47 et la ligne d'écriture 48 relatives à ce terminal sémaphore ; il est bien entendu relié au bus interne BI du terminal sémaphore TS1, et au bus général SYSBUS.

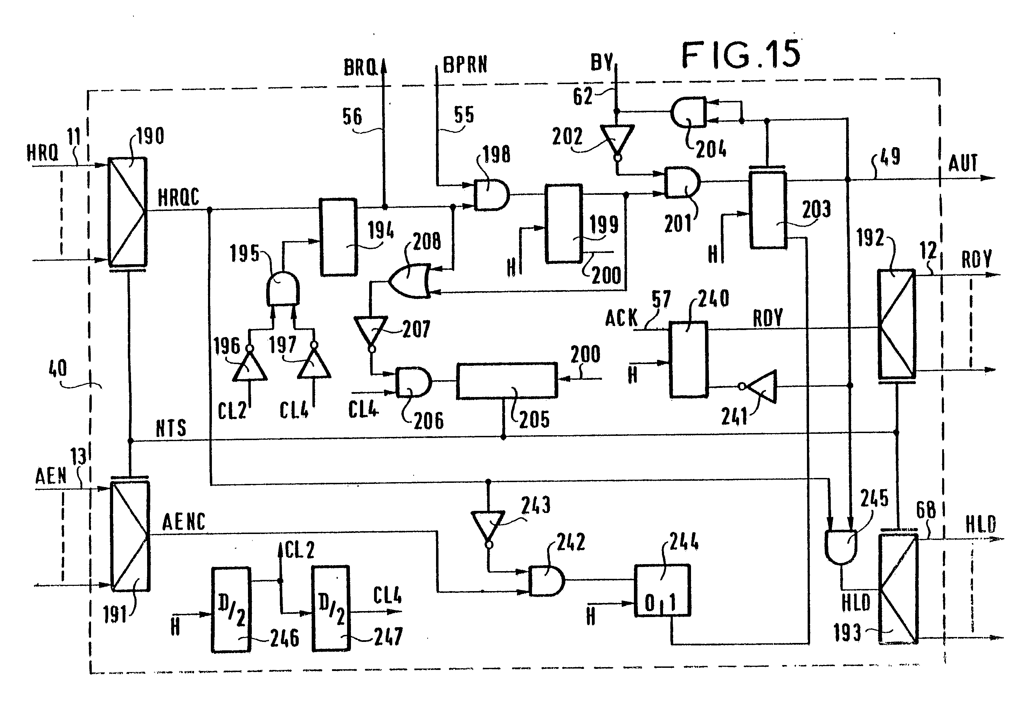

La figure 15 représente le module d'exploration 40 de l'unité de gestion représentée figure 3. L'unité de gestion gérant huit terminaux sémaphores, le module d'exploration est relié à chacun des huit terminaux par deux multiplexeurs 190, 191 et deux démultiplexeurs 192, 193 ; chaque multiplexeur et chaque démultiplexeur est donc relié par huit liaisons aux terminaux sémaphores. Le multiplexeur 190 est relié en entrée aux terminaux par des liaisons de demande 11, une par terminal, chaque liaison acheminant un signal de demande de transfert HRQ émis par le circuit accès direct mémoire 4 du terminal considéré. Le multiplexeur 191 est relié en entrée aux terminaux par des liaisons sortie d'adresses 13, une par terminal, chaque liaison acheminant les signaux de validation d'adresses AEN provenant du circuit accès direct mémoire 4 du terminal considéré. Le démultiplexeur 192 est relié en sortie aux circuits accès direct mémoire 4 des terminaux par des liaisons 12, une par terminal, chaque liaison acheminant un signal prêt RDY. Le démultiplexeur 193 est relié en sortie aux circuits accès bus interne 7 des terminaux par des liaisons d'acquittement 68, une par terminal, chaque liaison acheminant un signal d'acquittement HLD en réponse à une demande de transfert (signal HRQ liaison 11).

Une bascule 194 a une entrée signal reliée à la sortie du multiplexeur 190 et une entrée horloge reliée à la sortie d'une porte ET 195 recevant en entrée les signaux de temps CL2 et CL4 à travers des inverseurs 196 et 197 ; la sortie de la bascule 194 est reliée par la liaison demande de bus 56 d'une part au bus général SYSBUS et d'autre part à une entrée d'une porte ET 198 ; la bascule délivre un signal demande de bus, BRQ sur la liaison 56. Une autre entrée de la porte ET 198 est reliée par la liaison d'acquittement de priorité 55 au bus général SYSBUS et en reçoit un signal d'acquittement de priorité BPRN ; la sortie de la porte ET 198 est reliée à une entrée signal d'une bascule 199 qui reçoit le signal d'horloge H sur son entrée horloge ; l'entrée de remise à zéro de la bascule est reliée par le fil 200 au microprocesseur 33 de l'unité de gestion. Une porte ET 201 a une entrée reliée à la liaison 62 à travers un inverseur 202, la liaison 62 étant reliée au bus général SYSBUS et acheminant un signal d'occupation du bus BY ; une autre entrée de la porte ET 201 est reliée à la sortie de la bascule 199. Un point mémoire 203 est reliée en entrée à la sortie de la porte ET 201, et son entrée horloge reçoit le signal d'horloge H ; la sortie du point mémoire 203 est reliée d'une part aux quatre circuits d'accès 9 reliant les terminaux à l'unité de gestion par la ligne d'autorisation 49 qui achemine un signal d'autorisation AUT, et d'autre part à une entrée maintien du point mémoire 203 et à travers une porte unidirectionnelle 204 à la liaison 54 ; la porte unidirectionnelle 204 est une porte ET a deux entrées réunies entre elles.

Un compteur 205, à trois bits, a son entrée horloge reliée à la sortie d'une porte ET 206 ayant une entrée reliée à travers un inverseur 207 à la sortie d'une porte OU 208 et une autre entrée qui reçoit le signal d'horloge H4. La porte OU 208 a une entrée reliée à la sortie de la bascule 194 et une autre entrée reliée à la sortie de la bascule 199 ; la sortie parallèle du compteur 205 est reliée à l'entrée de sélection de chacun des multiplexeurs 190 et 191 et de chacun des démultiplexeurs 192, 193 auxquels le compteur délivre des numéros de 0 à 7 ; le compteur 205 est bloqué par l'intermédiaire de la porte OU 208 dès que le multiplexeur 190 délivre un signal de demande de transfert HRQC, et ce blocage est prolongé d'un temps d'horloge H par le signal délivré par la bascule 199.

Une bascule 240 a une entrée reliée au bus général SYSBUS par la liaison d'acquittement 57 qui délivre un signal d'acquittement d'écriture ou de lecture ACK et une entrée horloge recevant le signal d'horloge H ; la sortie de la bascule 240 est reliée à l'entrée du démultiplexeur 192 et délivre un signal prêt RDY ; l'entrée de remise à zéro de la bascule 240 est reliée à la sortie du point mémoire 203 à travers un inverseur 241. Une porte ET 242 a une entrée reliée à la sortie du multiplexeur 191 et une autre entrée reliée à travers un inverseur 243 à la sortie du multiplexeur 190 ; la sortie de la porte ET 242 est reliée à l'entrée d'un registre à décalage série 244, à deux bits, dont la sortie du deuxième bit est reliée à une entrée de remise à zéro du point mémoire 203 ; l'entrée horloge du registre à décalage 244 reçoit le signal H. Une porte ET 245 a une entrée reliée à la sortie du point mémoire 203 et une autre entrée reliée à la sortie du multiplexeur 190 ; la sortie de la porte ET 245 est reliée à l'entrée du démultiplexeur 193 et délivre un signal d'acquittement HLD en réponse à une demande de transfert, demande émise par un circuit accès direct mémoire 4 de l'un des huit terminaux sémaphores TS gérés par l'unité de gestion UG.

Deux diviseurs par deux 246 et 247 permettent d'obtenir les signaux CL2 et CL4 à partir du signal d'horloge H délivré par le central de télécommunications ; le signal d'horloge H est appliqué au diviseur par deux 246 dont la sortie délivre le signal CL2 et est reliée à l'entrée du diviseur par deux 247 qui délivre le signal CL4 ; les signaux CL2 et CL4 sont utilisés dans l'unité de gestion UG.

On va donner ci-après un exemple d'échange entre un terminal sémaphore et l'unité de gestion dans le cas par exemple où le récepteur 6 de ce terminal reçoit un octet par la liaison L. Le circuit réception envoie une demande de transfert au circuit accès direct mémoire 4 par l'intermédiaire du circuit accès bus interne 7 (figure 4) et du circuit de basculement de canaux 8 (figure 5). Dès prise en compte le circuit accès direct mémoire délivre sur la liaison de demande 11 un signal de demande de transfert HRQ. Dans le module d'exploration 40 (figure 15) de l'unité de gestion UG, dès que le compteur 205 délivre le numéro du terminal sémaphore demandeur, le multiplexeur 190 transmet le signal de demande de transfert HRQ et la bascule 194 délivre, sur la liaison demande de bus 56, un signal de demande de bus BRQ pour demander l'accès au bus général SYSBUS ; le signal BRQ sert également à bloquer le compteur 205 sur le numéro du terminal sémaphore demandeur. Dès que le bus général SYSBUS accorde la priorité au terminal demandeur, il délivre un signal d'acquittement de priorité BPRN ; dès que le bus général SYSBUS est libre le signal d'occupation BY passe à zéro sur la liaison 62 et le bus général SYSBUS est alors alloué au terminal sémaphore demandeur ; le point mémoire 203 (figure 15) délivre un signal d'autorisation AUT sur la ligne 49, ce signal servant également d'une part au maintien du point mémoire et d'autre part à délivrer un signal d'occupation BY, de valeur 1, sur la liaison 62. Par ailleurs, le démultiplexeur 193 qui est commandé par le compteur 205 délivre sur la liaison d'acquittement 68 du terminal sémaphore demandeur le signal HLD d'acquittement de demande de transfert.

Dans le terminal sémaphore demandeur, le signal HLD donne au récepteur l'accès du bus interne BI, et le circuit accès direct mémoire vient d'abord lire, dans le circuit de réception 6, l'octet reçu, puis délivre sur la ligne 13 le signal AEN de sortie d'adresses autorisant la sortie de ses adresses de transfert et l'envoi de celles-ci sur le bus général SYSBUS (figure 14) ; le circuit accès mémoire 4 délivre également un signal d'écriture MW, sur la ligne d'écriture 48, au circuit d'accès 9 pour écriture des données via le bus général SYSBUS, dans la mémoire centrale MC (figure 1). Dès l'écriture effectuée la mémoire centrale MC renvoie au module d'exploration 40 un signal d'acquittement ACK du bus général SYSBUS, sur la liaison 57, ce qui se traduit par l'envoi du signal prêt RDY au terminal demandeur dans lequel il fait retomber le signal de demande de transfert HRQ et le signal sortie d'adresses AEN ; la retombée de ces signaux provoque dans le module d'exploration la retombée du signal d'autorisation AUT et du signal demande de bus BRQ ; le bus général SYSBUS est libéré et le compteur 205 reprend son cycle de comptage.

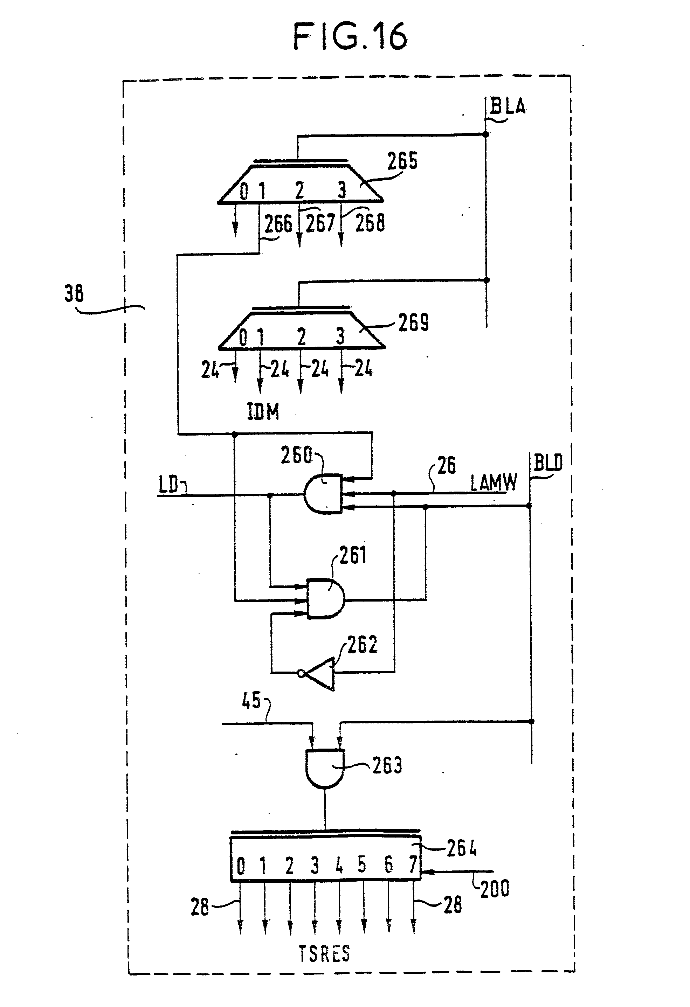

La figure 16 représente la deuxième interface 38 de la figure 3. Un décodeur 265 est relié en entrée au bus local d'adresses BLA et reçoit deux bits d'adresse du microprocesseur 33 ; en sortie le décodeur délivre sur un fil 266 un signal de validation d'échange par la ligne de données LD, sur un fil 267 un signal de validation de la mémoire vive 36, et sur un fil 268 un signal de validation de la mémoire morte 37. Un décodeur 269 est relié en entrée au bus local d'adresses BLA et reçoit deux bits d'adresses relatifs aux quatre circuits d'échanges 10 reliant l'unité de gestion aux huit terminaux sémaphores ; ces deux bits permettent donc d'envoyer un signal sur un circuit d'échange parmi quatre ; chacune des quatre sorties 0, 1, 2, 3 du décodeur est reliée par une liaison 24 à un circuit d'échange 10, le signal acheminé par une liaison 24 étant le signal de commande de décodage IDM (figures 3 et 10) ; le signal de commande décodage IDM n'est donc délivré qu'à un circuit d'échanges parmi quatre. Une porte ET 260 a une entrée reliée au bus local de données BLD et une autre entrée reliée par la liaison 26 au contrôleur de bus local 31 ; sa sortie est reliée à la ligne de données LD ; une autre porte ET 261 a une entrée reliée à la ligne de données LD et une autre entrée reliée, par un inverseur 262 à la liaison 26 qui achemine un signal de commande d'écriture LAMW ; une autre entrée de chacune des portes ET 260 et 261 est reliée au fil 266 en sortie du décodeur 265. Une porte ET 263 a une entrée reliée au bus local de données BLD et une autre entrée reliée par la ligne 45 au contrôleur de bus local 31 qui délivre un signal d'écriture ; un registre 264 à huit bits reçoit du bus local de données BLD huit bits relatifs chacun à un terminal sémaphore, chaque bit permettant la remise à zéro des organes du terminal correspondant ; en sortie du registre 264 on a donc huit liaisons 28, une par terminal puisque l'unité de gestion gère huit terminaux, chaque liaison délivrant un signal de remise à zéro TSRES lorsque le bit correspondant à la valeur 1 ; l'unité de gestion peut donc commander la remise à zéro d'un terminal, ou de plusieurs terminaux, ou encore de tous les terminaux simultanément. Le registre 264 a une entrée de remise à zéro reliée au fil 200 (figure 3) pour remise à zéro par le microprocesseur 33 de l'unité de gestion.

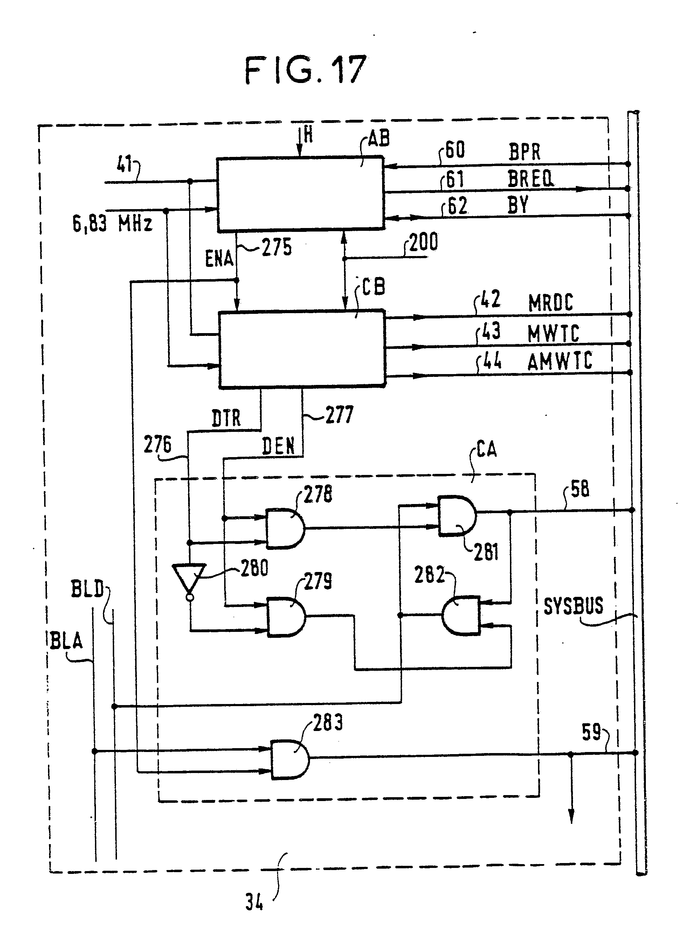

La figure 17 représente la première interface 34 de la figure 3. L'arbitre de bus AB et le contrôleur de bus CB sont reliés au microprocesseur 33 par la liaison d'état 41 et reçoivent le signal d'horloge à 6,83 MHz de l'horloge 30 ; l'arbitre de bus AB reçoit également le signal d'horloge H du central.

L'arbitre de bus AB est relié par une ligne de sortie d'adresses 275 au contrôleur de bus CB et au circuit d'accès CA, et délivre sur cette ligne un signal de sortie d'adresses ENA ; il est également relié au bus général SYSBUS par les liaisons 60, 61, 62 ; par la liaison d'acquittement de priorité 60 il reçoit un signal d'acquittement de priorité BPR, par la liaison de demande de bus 61 il émet un signal de demande de bus BREQ, par la liaison d'occupation bidirectionnelle 62, il émet ou reçoit un signal d'occupation BY du bus général SYSBUS. Le contrôleur de bus CB est relié au bus général SYSBUS par les liaisons 42, 43, 44 ; le contrôleur émet par la liaison de lecture 42 un signal de lecture MRDC, par la liaison d'écriture 43 un signal d'écriture MWTC et par la liaison de commande 44 un signal de commande d'écriture anticipée AMWTC. Le contrôleur de bus CB est relié au circuit d'accès CA par une ligne de validation de données 276 par laquelle il délivre un signal de validation de sortie de données DTR, et par une ligne d'ordre de transfert de données 277 par laquelle il délivre un signal de transfert de données DEN.

Le circuit d'accès CA a une porte ET 278 ayant une entrée reliée à la ligne 276 et une autre entrée reliée à la ligne 277, une porte ET 279 ayant une entrée reliée par un inverseur 280 à la ligne 276 et une autre entrée reliée à la ligne 277 ; une porte ET 281 a une entrée reliée à la sortie de la porte ET 278 et une autre entrée reliée au bus local de données BLD, sa sortie étant relié au bus général SYSBUS par la liaison de données 58 ; une porte ET 282 a une entrée reliée à la liaison de données 58 et une autre entrée reliée à la sortie de la porte ET 279, sa sortie étant reliée au bus local de données BLD ; une porte ET 283 a une entrée reliée au bus local d'adresses BLA et une autre entrée reliée à la ligne 275, sa sortie étant reliée au bus général SYSBUS par la liaison d'adresses 59. Le microprocesseur peut accéder au bus général SYSBUS grâce au contrôleur de bus CB et à l'arbitre de bus AB qui génèrent les signaux adéquats. Sur demande du microprocesseur 33 l'arbitre de bus envoie un signal de demande de bus BREQ et reçoit en réponse un signal d'acquittement de priorité BPR si le bus général SYSBUS est libre ; dès réception du signal BPR et dès que le bus général est libre (BY = o) l'arbitre de bus émet un signal d'occupation BY pour réserver le bus.

Le circuit d'accès CA permet l'envoi de données et d'adresses ou la réception de données du bus général SYSBUS, selon que le microprocesseur 33 veut accéder soit aux mémoires 36, 37 ou à la mémoire d'échanges 92, soit à la mémoire centrale MC par l'intermédiaire du bus général SYSBUS, c'est-à-dire en mettant en œuvre soit le contrôleur de bus local 31 (accès aux mémoires 36, 37 et 92), soit le contrôleur de bus CB pour engendrer les signaux d'écriture ou de lecture appropriés.

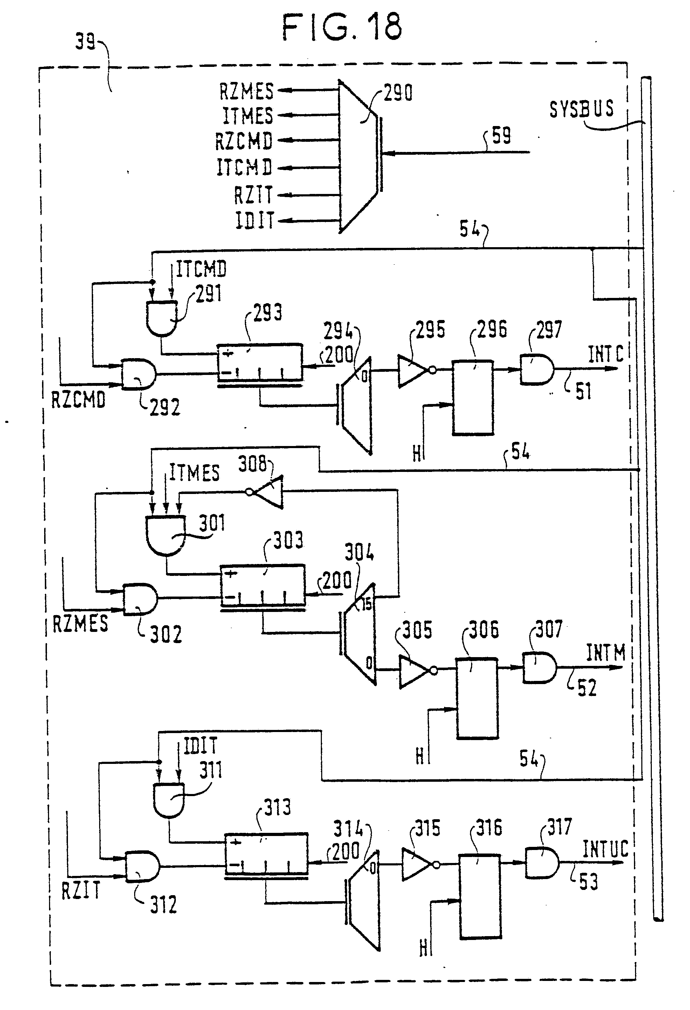

La figure 18 représente le circuit d'interruptions 39 de la figure 3. Un décodeur 290 est relié en entrée à la liaison d'adresses 59, figure 17 ; par décodage des poids faibles des adresses de la liaison d'adresses, le décodeur délivre des adresses RZMES, ITMES, RZCMD, ITCMD, RZIT, IDIT. Un premier circuit d'interruption est constitué par deux portes ET 291, 292, un compteur 293, à quatre bits, un décodeur 294, un inverseur 295, une bascule 296, et une porte d'isolement 297. La porte ET 291 a une entrée reliée par la liaison 54 au bus général, une autre entrée reliée au décodeur 290 duquel elle reçoit l'adresse ITCMD, et sa sortie reliée à l'entrée comptage du compteur 293. La porte ET 292 a une entrée reliée à la liaison 54, une autre entrée reliée au décodeur 290 duquel elle reçoit l'adresse RZCMD, et sa sortie reliée à l'entrée décomptage du compteur 293 ; la sortie du compteur est reliée à l'entrée du décodeur 294 dont la sortie zéro est reliée par l'inverseur 295 à l'entrée de la bascule 296 qui est pilotée par le signal d'horloge H ; la sortie de la bascule est reliée à la liaison 51 à travers la porte d'isolement 297. Une entrée de remise à zéro du compteur 293 est reliée au fil 200 (figure 3), pour remise à zéro par le microprocesseur 33.

Un deuxième circuit d'interruption est constitué par deux portes ET 301, 302, un compteur 303, un décodeur 304, un inverseur 305, une bascule 306, une porte d'isolement 307, et un inverseur 308.

La porte ET 301 a une entrée reliée par la liaison 54 au bus général, une autre entrée reliée au décodeur 290 duquel elle reçoit l'adresse ITMES, et sa sortie reliée à l'entrée comptage du compteur 303. La porte ET 302 a une entrée reliée à la liaison 54, une autre entrée reliée au décodeur 290 duquel elle reçoit l'adresse RZMES, et sa sortie reliée à l'entrée décomptage du compteur 303. La sortie du compteur 303 est reliée à l'entrée du décodeur 304 dont la sortie zéro est reliée par l'inverseur 305 à l'entrée de la bascule 306, et dont la sortie quinze est reliée par l'inverseur 308 à une autre entrée de la porte ET 301. La bascule 306 est pilotée par le signal d'horloge H et sa sortie est reliée à la liaison 52 à travers la porte d'isolement 307. Une entrée de remise à zéro du compteur 303 est reliée au fil 200 (figure 3), pour remise à zéro par le microprocesseur 33.

Un troisième circuit d'interruption est constitué par deux portes ET 311, 312, un compteur 313, un décodeur 314, un inverseur 315, une bascule 316, et une porte d'isolement 317. La porte ET 311 a une entrée reliée par la liaison 54 au bus général, une autre entrée reliée au décodeur 290 duquel elle reçoit l'adresse IDIT, et sa sortie reliée à l'entrée comptage du compteur 313. La porte ET 312 a une entrée reliée à la liaison 54, une autre entrée reliée au décodeur 290 duquel elle reçoit l'adresse RZIT, et sa sortie reliée à l'entrée décomptage du compteur 313. La sortie du compteur 313 est reliée à l'entrée du décodeur 314 dont la sortie zéro est reliée par l'inverseur 315 à l'entrée de la bascule 316 pilotée par le signal d'horloge H. La sortie de la bascule 316 est reliée à la liaison 53 par la porte d'isolement 317. Une entrée de remise à zéro du compteur 313 est reliée au fil 200 (figure 3), pour remise à zéro par le microprocesseur 33.

L'unité de gestion représentée figure 3, envoie à l'unité de commande UC une interruption commande INTC sur la liaison 51 et une interruption messages INTM sur la liaison 52. L'unité de commande UC envoie à l'unité de gestion une interruption commande qui est délivrée par la liaison 53, INTUC, au contrôleur d'interruption 35 (figure 3). Une interruption commande signifie que l'unité de gestion, ou l'unité de commande UC, a placé une commande relative à un terminal sémaphore dans la zone d'échange appropriée en mémoire centrale MC. Une interruption message signifie que l'unité de gestion a placé un message dans la file d'un terminal sémaphore en mémoire centrale MC. Les interruptions restent positionnées tant qu'il subsiste une commande, ou un message, à prendre en compte.

Pour le premier circuit d'interruption l'adresse ITCMD signifiant l'envoi d'une commande vers l'unité de commande UC, provoque l'incrémentation du compteur 293, et par conséquent l'envoi d'une interruption sur la liaison 51 qui interrompt le fonctionnement de l'unité de commande UC ; après prise en compte de la commande l'unité de commande UC délivre l'adresse RZCMD qui provoque la décrémentation du compteur 293 ; tant que le compteur n'est pas à zéro l'interruption subsiste. L'adresse ITCMD, décodée par le décodeur 290, est émise par l'unité de gestion sur la liaison 59 (figure 17), cette adresse étant délivrée par le microprocesseur 33 de l'unité de gestion.

Pour le deuxième circuit d'interruption l'adresse ITMES signifiant l'envoi d'un message vers l'unité de commande UC, provoque l'incrémentation du compteur 303, et par conséquent l'envoi d'une interruption sur la liaison 52 qui interrompt le fonctionnement de l'unité de commande UC ; après prise en compte du message l'unité de commande UC délivre l'adresse RZMES qui provoque la décrémentation du compteur 303, l'interruption susbistant tant que le compteur n'est pas à zéro. L'adresse ITMES est délivrée par le microprocesseur 33 et émise sur la liaison 59. Le compteur 303 est bloqué sur décodage de quinze par le décodeur 304.

Pour le troisième circuit d'interruption l'adresse IDIT signifiant l'envoi d'une commande par l'unité de commande UC sur la liaison 59, provoque l'incrémentation du compteur 313, et par conséquent l'envoi d'une interruption sur la liaison 53 qui interrompt le fonctionnement du microprocesseur 33 de l'unité de gestion. Après prise en compte de la commande le microprocesseur délivre l'adresse RZIT qui provoque la décrémentation du compteur 313, l'interruption subsistant tant que le compteur n'est pas à zéro.

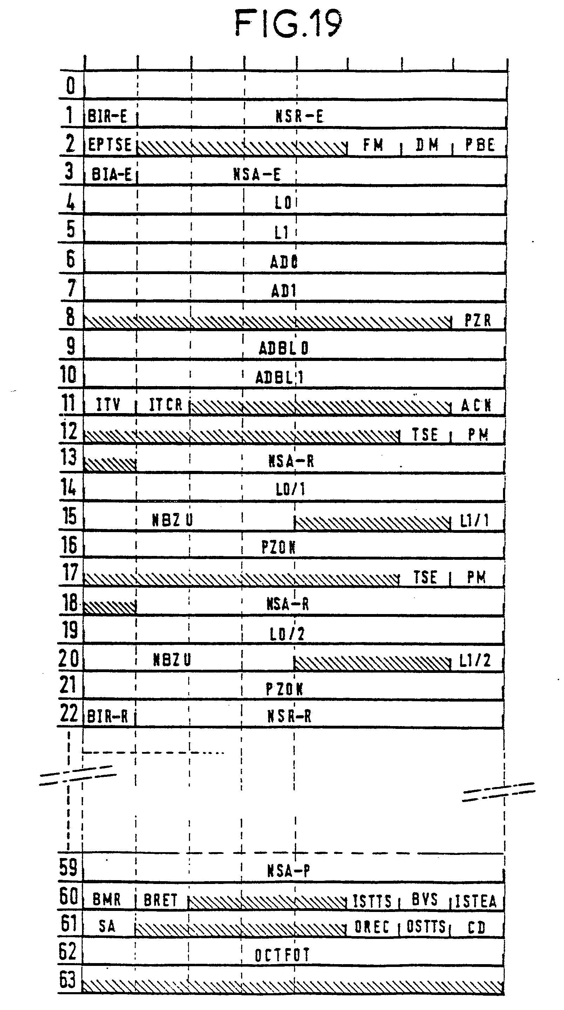

La figure 19 représente une zone de 64 octets de la mémoire d'échange 92, de la figure 6 qui représente le circuit d'échange 10 de la figure 2 ; la mémoire d'échange étant commune à deux terminaux sémaphores comporte donc deux parties de 64 octets, chaque partie étant affectée à un terminal.

Les différents octets sont définis ci-après.
Octet 0
Cet octet est réservé à une interruption
Octet 1
Un bit indicateur vers l'arrière à émettre BIR-E.
Sept bits NSRE numéro de séquence arrière à émettre.
Zone d'émission, octets 2 à 7.
Octet 2
Un bit EPTSE, émission permanente d'une

trame sémaphore d'état (TSE).

Quatre bits non utilisés.

Un bit FM, fin de message.

Un bit DM, début de message.

Un bit PBE, présence de bloc à émettre.

Octet 3

Un bit indicateur vers l'avant à émettre BIA-E.

Sept bits NSA-E, numéro de séquence avant à émettre.

Octet 4

Huit bits LO, longueur de la trame.

Octet 5

Huit bits L1. Les octets 4 et 5 donnent la longueur totale de la trame à émettre.

Octet 6

Huit bits AD0 adresse en mémoire centrale.

Octet 7

Huit bits AD1. Les octets 6 et 7 donnent l'adresse en mémoire centrale de la trame à émettre.

Zone passage de blocs, octets 8 à 10.

Octet 8

Sept bits inutilisés.

Un bit PZR pour indiquer la présence de bloc libre pour la réception.

Octet 9

Huit bits ADBL0 adresse de bloc libre.

Octet 10

Huit bits ADBL1. Les octets 9 et 10 donnent l'adresse de bloc libre (en mémoire centrale).

Octet 11

Un bit ITV pour indiquer la réception d'une trame sémaphore de remplissage.

Un bit ITCR pour indiquer la réception d'une trame correcte.

Cinq bits inutilisés.

Un bit ACN signifiant : détection d'un accusé négatif à émettre.

Première zone de réception, octets 12 à 16.

Octet 12

Six bits inutilisés.

Un bit TSE pour indiquer une trame sémaphore d'état reçue.

Un bit PM pour indiquer la présence d'un message en réception.

Octet 13

Un bit inutilisé.

Sept bits NSA-R numéro de séquence avant reçu.

Octet 14

Huit bits LO/1.

Octet 15

Quatre bits NBZU pour indiquer le nombre de blocs reçus.

Trois bits inutilisés.

Un bit L1/1. Ce bit avec l'octet 14 donne la longueur de la trame reçue.

Octet 16

Huit bits PZON, qui constituent le pointeur sur le premier bloc du message reçu dans la file des blocs reçus (octets 23 à 58).

Deuxième zone de réception, octets 17 à 21.

Octet 17

Six bits inutilisés.

Un bit TSE pour indiquer une trame sémaphore d'état.

Un bit PM pour indiquer la présence d'un message.

Octet 18

Un bit inutilisé.

Sept bits NSA-R, numéro de séquence avant reçu.

Octet 19

Huit bits LO/2, longueur de la trame.

Octet 20

Quatre bits NBZU pour indiquer le nombre de blocs.

Trois bits inutilisés.

Un bit L1/2. Ce bit avec l'octet 19 donne la longueur de la trame reçue.

Octet 21

Huit bits PZON, qui constituent le pointeur sur le premier bloc du message reçu dans la file des blocs reçus (octets 23 à 58).

Octet 22

Un bit indicateur vers l'arrière reçu BIR-R.

Sept bits NSR-R, numéro de séquence arrière reçu.

File des blocs de réception, octets 23 à 58

Ces octets représentent les adresses de blocs successives utilisées pour la réception des trames sémaphore (file des blocs réception).

Octet 59

Huit bits NSA-P qui indiquent le numéro de séquence avant de la plus ancienne trame sémaphore de message dans le tampon de retransmission.

Octet 60

Un bit BMR pour activer la réception (passage de 0 à 1) ou pour la désactiver (passage de 1 à 0).

Un bit BRET de valeur 1 lorsque le terminal sémaphore doit rejeter toute trame de remplissage ou de message.

Trois bits inutilisés.

Un bit ISTTS de valeur 1 si activation de la surveillance du taux d'erreur sur les trames reçues, hors alignement.

Un bit BVS de valeur 1 état d'urgence pendant l'alignement.

Un bit ISTEA de valeur 1 si activation de la surveillance du taux d'erreur pendant l'alignement.

Octet 61

Un bit SA pour indiquer que le seuil d'erreur pendant l'alignement est atteint.

Quatre bits inutilisés.

Un bit OREC pour indiquer l'origine réception de la défaillance du terminal.

Un bit OSTTS pour indiquer une défaillance causée par un taux d'erreur excessif du système de surveillance du taux d'erreur sur les trames sémaphores.

Un bit CD pour indiquer un canal défaillant.

Octet 62

Huit bits réserves a un code d'erreur et aux tests.

Octet 63

Huit bits inutilisés.

Fonctionnement à l'émission.

Emission d'une trame sémaphore de message.

Le niveau 3, c'est-à-dire l'unité de commande UC indique à l'unité de gestion, UG1 par exemple, qu'une trame de message doit être émise par un terminal sémaphore donné. L'unité de gestion vient écrire, dans la zone émission de la mémoire d'échanges 92 du circuit d'échange 10, c'est-à-dire dans les octets 2 à 7 de la moitié de la mémoire d'échanges affectée au terminal donné :

— le numéro de séquence avant à émettre, NSA-E, et le bit indicateur vers l'avant à émettre BIA-E.

— la longueur totale de la trame à émettre, L0 et L1,

— l'adresse, AD0, AD1 en mémoire centrale MC, de cette trame.

L'unité de gestion UG1 positionne ensuite les bits FM, DM et PBE (octet 2).

Le numéro de séquence vers l'arrière à émettre, NSR-E, octet 1, est mis à jour régulièrement par l'unité de gestion et pris en compte cycliquement par le terminal sémaphore. En routine le terminal lit le bit PBE ; dès qu'il le trouve à 1, ce qui signifie qu'il y a présence de bloc à émettre, il vient acquérir les différentes données présentes et remet le bit PBE à zéro. Le terminal va alors armer le canal émission non actif du circuit accès direct mémoire 4 avec l'adresse AD0, AD1 (octets 6, 7), puis au cours du traitement de l'interruption émission qui suit, il arme l'émetteur 5 en lui fournissant la largeur de la trame L0, L1 (octets 4 et 5), le numéro de séquence avant à émettre NSA-E (sept bits de l'octet 3) et le bit BIA-E (octet 3), et le numéro de séquence arrière à émettre NSR-E (sept bits de l'octet 1) et le bit BIR-E (octet 1), et bascule sur le canal armé préalablement. Pour une trame sémaphore de message en plusieurs blocs, l'unité de gestion UG1 passe successivement les blocs au terminal, c'est-à-dire que pour les blocs autres que le premier, l'unité de gestion ne passe que l'adresse du bloc, AD0, AD1, et les bits FM, DM, PBE (FM = 1 si fin de message, DM = 1 si début de message, PBE = 1 si présence de bloc à émettre).

Emission de trames sémaphores d'état.

L'émission d'une trame sémaphore d'état se répète jusqu'à changement d'état. L'unité de gestion réalise les mêmes opérations que pour une trame sémaphore de message d'un bloc, mais elle positionne le bit EPTSE à 1 (émission permanente d'une trame sémaphore d'état). Quand le microcontrôleur du terminal trouve les bits PBE (présence de bloc à émettre) et EPTSE, à 1, il prépare l'émission de la trame sémaphore d'état, met le bit PBE à zéro, et réitérera l'émission de cette trame jusqu'à ce qu'il trouve le bit PBE repositionné à 1 ou que le bit EPTSE soit repassé à zéro.

Emission de trames sémaphores de remplissage.

En l'absence de trames sémaphores de message ou d'état à émettre, le microcontrôleur du terminal arme l'émission d'une trame sémaphore de remplissage. Les paramètres associés à une telle trame de remplissage sont le numéro de séquence avant NSA-E émis dans la trame précédente et le numéro de séquence arrière émis NSR-E, ces numéros étant lus dans la mémoire d'échange. L'adresse du bloc mémoire réservé à l'émission d'une trame de remplissage, il s'agit de l'adresse de ce bloc en mémoire centrale MC, est connue du microcontrôleur. Lors d'émission de trames sémaphores de remplissage successives, c'est le même canal d'émission, du circuit accès direct mémoire 4, qui est utilisé.

Fonctionnement en réception.

Dès qu'un canal réception du circuit accès direct mémoire 4 est trouvé inactif, non armé, le microcontrôleur du terminal sémaphore l'arme pour un bloc libre de trente octets. A cet effet il dispose d'une file interne d'adresses de blocs libres et est régulièrement alimenté en blocs disponibles par l'unité de gestion via la mémoire d'échanges 92. Il y a basculement d'un canal réception sur l'autre à chaque fin de message et à chaque fin de bloc de trente octets reçus.

Le microcontrôleur est interrompu par le récepteur 6 à la fin de la réception d'une trame ; après contrôle de la validité de cette trame, et après avoir agi en conséquence sur les compteurs d'erreurs, il détermine le type de trame (message, état, remplissage, à l'aide de la longueur de la trame fournie par le récepteur, et le nombre de blocs utilisés pour sa réception ; il contrôle en conséquence la cohérence des numéros de séquence arrière NSR-R, de séquence avant NSA-R et du bit BIA-R reçus.

Trame sémaphore message reçue.

Le microcontrôleur place ensuite les données utiles à l'unité de gestion dans l'une des deux zones réception de la mémoire d'échange (octets 12 à 16 ou 17 à 20), ces deux zones réception étant utilisées en alternat. Ces données sont :

— le numéro de séquence vers l'avant reçu NSA-R,

— la longueur de la trame reçue (9 bits : L0/1 et L1/1) et le nombre de blocs reçus NBZU,

— l'indication du pointeur du premier bloc dans la file, PZON.

Enfin le microcontrôleur met le bit PM à 1, pour indiquer la présence d'un message, et le bit TSE à zéro puisqu'il ne s'agit pas d'une trame d'état ; il envoie ensuite une interruption vers l'unité de gestion par le générateur d'interruptions I (figures 6 et 13), cette interruption étant reçue par le contrôleur d'interruptions 35 de l'unité de gestion (figure 3). Si le message est constitué de plusieurs blocs, les adresses des blocs successifs utilisés pour le recevoir se trouvent, dans la file des blocs de réception (octets 23 à 58), à la suite de l'adresse du premier bloc.

Trame sémaphore d'état reçue.

La procédure est la même que pour la réception d'une trame sémaphore message, mais le microcontrôleur positionne également le bit TSE à un.

Trame sémaphore de remplissage reçue.

La procédure est la même que précédemment, mais les bits PM et TSE restent positionnés à zéro et seul le bit ITV indiquant qu'il s'agit d'une trame de remplissage est positionné à un (octet 11). Le microcontrôleur du terminal récupère les adresses des blocs mémoire utilisés pour la réception de la trame de remplissage, ainsi d'ailleurs que celles utilisées pour une trame trouvée incorrecte après contrôle, en plaçant ces adresses dans sa file interne d'adresses de blocs disponibles.

Enfin le numéro de séquence vers l'arrière reçu NSR-R et le bit indicateur vers l'arrière reçu BIR-R sont mis à jour à chaque trame de remplissage ou de message reçue, et le bit ACN, accusé négatif à émettre (octet 11), est positionné, si nécessaire, par le microcontrôleur.

Le fonctionnement indiqué est le même pour les deux terminaux sémaphores TS0 et TS1 de la figure 2 qui ont en commun le circuit d'échanges 10 représenté figure 6, l'accès à la mémoire d'échange 92, c'est-à-dire l'adressage de celle-ci étant commandé par le circuit de signaux de multiplexage B qui permet aux deux terminaux et à l'unité de gestion d'avoir accès cycliquement à la mémoire d'échange 92.

**Revendications**

1. Dispositif de terminaux sémaphores pour le système de signalisation CCITT N° 7, comportant des terminaux sémaphores reliés à un réseau de connexion d'un central de télécommunications, et des unités de gestion (UG) des terminaux, les terminaux sémaphores (TS) constituant des groupes (1, 2) de terminaux sémaphores reliés chacun à une unité de gestion (UG1, UG2), caractérisé par le fait que les unités de gestion et les terminaux sont reliés par un bus général (SYS-BUS) à une unité de commande (UC) et à une mémoire centrale (MC) constituant le niveau 3 du central, et que dans chaque groupe chaque terminal est relié au bus général par un circuit d'accès (9) et à l'unité de gestion par un circuit d'échanges (10). lesdits circuits d'accès (9) et d'échanges (10) étant associés chacun à deux terminaux au plus.

2. Dispositif de terminaux sémaphores selon la revendication 1, caractérisé par le fait qu'un terminal sémaphore comprend un microcontrôleur (3), un émetteur (5), un récepteur (6), un circuit accès bus interne (7), un circuit basculement de canaux (8), et un circuit accès direct mémoire (4), qu'un bus interne (BI) relie entre eux le microcontrôleur, l'émetteur, le récepteur, le circuit accès direct mémoire, et le circuit d'accès (9), que l'émetteur et le récepteur sont reliés au réseau de connexion par une liaison bidirectionnelle (L), au circuit accès bus interne (7) et au circuit de basculement de canaux par une liaison (23), que l'émetteur est relié par une liaison interruption émission (17) au microcontrôleur, que le récepteur est relié par une liaison interruption réception (18) au microcontrôleur, que le circuit accès bus interne (7) est relié au microcontrôleur, au circuit de basculement de canaux (8), au circuit accès direct mémoire (4), et par une liaison d'acquittement (68) à l'unité de gestion, que le circuit de basculement de canaux (8) est relié au microcontrôleur et au circuit accès direct mémoire, que le microcontrôleur (3) est relié au circuit d'échanges (10) par une ligne d'adresses (19) et une ligne de données (20), que le circuit accès direct mémoire est relié au circuit d'accès (9) par une ligne de lecture (47), une ligne d'écriture (48) et une ligne de sortie d'adresses (13), que l'émetteur, le récepteur, le microcontrôleur et le circuit accès direct mémoire sont reliés à l'unité de gestion par une liaison de remise à zéro (28), que le circuit accès direct mémoire est relié à l'unité de gestion par une liaison de demande (11), une liaison prêt (12) et la ligne de sortie d'adresses (13), que le circuit d'accès (9) est relié au bus général (SYSBUS) et par une ligne d'autorisation (49) à l'unité de gestion, et que le circuit d'échanges (10) est relié à l'unité de gestion par un bus d'adresses (LA), un bus de données (LD), une liaison de commande de décodage (24), un liaison de commande de lecture (25), une liaison de commande d'écriture (26), une liaison terminal prêt (27) et une liaison interruption (29).

3. Dispositif de terminaux sémaphores selon la revendication 2, caractérisé par le fait que le circuit d'accès (9) et le circuit d'échanges (10) sont communs à deux terminaux et que le circuit d'échanges (10) comporte une mémoire d'échanges (92) ayant un circuit d'adressage relié aux deux terminaux par les lignes d'adresses (19) et à l'unité de gestion par le bus d'adresses (LA), ladite mémoire d'échanges (92) étant reliée en entrée aux deux terminaux par les lignes de données (20), et à l'unité de gestion par le bus de données (LD), et en sortie aux deux terminaux par les lignes de données (20) et à l'unité de gestion par le bus de données (LD), ladite mémoire étant divisée en deux parties réservées chacune à un terminal.

4. Dispositif de terminaux sémaphores selon la revendication 2, caractérisé par le fait qu'une unité de gestion (UG) comporte un microprocesseur (33), un contrôleur de bus local (31), une première interface (34), un bloc de compteurs (32), un contrôleur d'interruptions (35) une deuxième interface (38), une mémoire vive (36), une mémoire morte (37), un circuit d'interruptions (39) et un module d'exploration (40), que le microprocesseur (33) est relié par un bus local de données (BLD) à la première interface (34), au bloc de compteurs (32), au contrôleur d'interruptions (35), à la mémoire vive (36), à la mémoire morte (37) et à la deuxième interface (38), et par un bus local d'adresses (BLA) à la première interface (34), à la mémoire vive (36), à la mémoire morte (37), à la deuxième interface (38), au contrôleur d'interruptions (35) et au bus d'adresses (LA) reliant l'unité de gestion aux circuits d'échanges (10), que le microprocesseur (33) est relié au contrôleur de bus local (31) et à la première interface (34) par une liaison d'état (41), que le contrôleur de bus local (31), est relié au circuit d'échanges (10) par les liaisons de commande de lecture (25) et d'écriture (26), à la deuxième interface (38) par une ligne de signal d'écriture (45) et la liaison de commande d'écriture (26), au bloc de compteurs (32) et au contrôleur d'interruptions (35) par la ligne de signal d'écriture (45), à la mémoire vive (36) et à la mémoire morte (37) par la liaison de commande de lecture (25) et à la mémoire vive par la liaison de commande d'écriture (26), que la deuxième interface (38) est reliée aux circuits d'échanges par le bus de données (LD) et la liaison de commande de décodage (24), et aux terminaux sémaphores par la liaison de remise à zéro (28), que la première interface est reliée au bus général (SYSBUS), que le circuit d'interruption (39) est relié aux bus général, au contrôleur d'interruptions (35) et à la mémoire centrale (MC), et que le module d'exploration (40) est relié aux circuits accès direct mémoire (4) et aux circuits accès bus interne (7) des terminaux sémaphores, aux circuits d'accès (9), et au bus général (SYSBUS).

5. Dispositif de terminaux sémaphores selon la revendication 4, caractérisé par le fait que la première interface (34) comporte un contrôleur de bus (CB), un arbitre de bus (AB) et un circuit d'accès (CA), que l'arbitre de bus (AB) et le contrôleur de bus (CB) sont reliés au microprocesseur (33) par une liaison d'adresses (41), que l'arbitre de bus est relié au contrôleur de bus (CB) et au circuit d'accès (CA) par une ligne de sortie d'adresses (275), et au bus général par une liaison d'acquittement de priorité (60), une liaison de demande de bus (61) et une liaison d'occupation (62), que le contrôleur de bus (CB) est relié au circuit d'accès (CA) par une ligne de validation de données (276) et par une ligne d'ordre de transfert de données (277), et au bus général par une liaison de lecture (42), une liaison d'écriture (43) et une liaison de commande d'écriture (44), et que le circuit d'accès (CA) est relié au bus local de données (BLD), au bus local d'adresses (BLA), et au bus général par une liaison de données (58) et une liaison d'adresses (59).

6. Dispositif de terminaux sémaphores selon la revendication 4, caractérisé par le fait que le module d'exploration (40) d'une unité de gestion comporte un premier multiplexeur (190) relié en entrée à chaque terminal sémaphore du groupe de terminaux par une liaison de demande (11), un deuxième multiplexeur (191) relié en entrée à chaque terminal sémaphore par une liaison sortie d'adresses (13), un premier démultiplexeur (192) relié en sortie à chaque terminal sémaphore par une liaison prêt (12), et un deuxième démultiplexeur (193) relié en sortie à chaque terminal sémaphore par une liaison d'acquittement (68), que le premier multiplexeur (190) est relié en sortie à une première bascule (194) reliée en sortie au bus général par une liaison demande de bus (56) et à une entrée d'une première porte ET (198) dont une autre entrée est reliée au bus général par une liaison d'acquittement de priorité (55), ladite première porte ET étant reliée en sortie à une deuxième bascule (199) reliée en sortie à une entrée d'une deuxième porte ET (201) dont une autre entrée est reliée via un inverseur (202) au bus général par une liaison d'occupation (62), ladite deuxième porte ET étant reliée en sortie à un point mémoire (203) relié en sortie aux circuits d'accès (9) par une ligne d'autorisation (49), que le deuxième multiplexeur (191) est relié en sortie à une entrée d'une troisième porte ET (242) dont une autre entrée est reliée à travers un inverseur (243) à la sortie du premier multiplexeur, ladite troisième porte ET étant reliée en sortie à un registre à décalage série (244) relié en sortie à une entrée de remise à zéro du point mémoire (203), que le premier démultiplexeur (192) est relié en entrée à la sortie d'une bascule (240) dont l'entrée est reliée par une liaison d'acquittement (67) au bus général, et une entrée de remise à zéro est reliée à travers un inverseur (241) à la sortie du point mémoire (203), et qu'un compteur (205) est relié en sortie à une entrée de validation des premier et deuxième multiplexeurs et des premier et deuxième démultiplexeurs.

**Claims**

1. A signaling terminal device for the CCITT N° 7 signaling system, comprising signaling terminals connected to a telecommunication exchange switching network, and control units (UG) for controlling the terminals, the signaling terminals (TS) constituting groups (1, 2) of signaling terminals, each one connected to one control unit (UG1, UG2), characterized in that the control units and the terminals are connected via a general bus (SYSBUS) to a general control unit (UC) and to a central memory (MC) constituting the level 3 of the exchange, and that in each group, each terminal is connected to the general bus via an access circuit (9) and to the terminal control unit through an interchange circuit (10), the access and interchange circuits (9, 10) each being associated to two terminals at most.

2. A signaling terminal device according to claim 1, characterized in that a signaling terminal comprises a microcontroller (3), a sender (5), a receiver (6), an internal bus access circuit (7), a channel changeover circuit (8) and a direct memory access circuit (4), that an internal bus (BI) interconnects the microcontroller, the sender, the receiver, the direct memory access circuit and the access circuit (9), that the sender and the receiver are connected to the switching network via a bidirectional link (L), to the internal bus access circuit (7) and to the channel changeover circuit via a link (23), that the sender is connected via a transmit-interrupt link (17) to the microcontroller, that the receiver is connected via a receive-interrupt link (18) to the microcontroller, that the internal bus access circuit (7) is connected to the microcontroller, to the channel changeover circuit (8), to the direct memory access circuit (4) and via an acknowledgment link (68) to the terminal control unit, that the channel changeover circuit (8) is connected to the microcontroller and to the direct memory access circuit, that the microcontroller (3) is connected to the interchange circuit (10) via an address line (19) and a data line (20), that the direct memory access circuit is connected to the access circuit (9) via a read line (47), a write line (48) and an address output line (13), that the sender, the receiver, the microcontroller and the direct memory access circuit are connected to the terminal control unit via a reset link (28), that the direct memory access circuit is connected to the terminal control unit via a request link (11), a ready link (12) and the address output line (13), that the access circuit (9) is connected to the general bus (SYSBUS) and by an authorization line (49) to the terminal control unit and that the interchange circuit (10) is connected to the terminal control unit via an address bus (LA), a data bus (LD), a decoding control link (24), a read control link (25), a write control link (26), a terminal ready link (27) and an interrupt link (29).

3. A signaling terminal device according to claim 2, characterized in that the access circuit (9) and the interchange circuit (10) are common to two terminals and that the interchange circuit (10) comprises an interchange memory (92), the address circuit of which is connected to both terminals via address lines (19) and to the terminal control unit by the address bus (LA), the input of said interchange memory (92) being connected to both terminals via the data lines (20) and to the terminal control unit via the data bus (LD), whereas the output of the interchange memory is connected to both terminals via the data lines (20) and to the terminal control unit via the data bus (LD), said memory being split into two parts, each allocated to one of the terminals.

4. A signaling terminal device according to claim 2, characterized in that a terminal control unit (UG) comprises a microprocessor (33), a local bus controller (31), a first interface (34), a counter assembly (32), an interrupt controller (35), a second interface (38), a random access memory (36), a read only memory (37), an interrupt circuit (39) and a scanning module (40), that the microprocessor (33) is connected via a local data bus (BLD) to the first interface (34), to the counter assembly (32), to the interrupt controller (35), to the random access memory (36), to the read only memory (37) and to the second interface (38) and via a local address bus (BLA) to the first interface (34), to the random access memory (36), to the read only memory (37), to the second interface (38), to the interrupt controller (35) and to the address bus (LA) which connects the terminal control unit to the interchange circuits (10), that the microprocessor (33) is connected to the local bus controller (31) and to the first interface (34) via a status link (41), that the local bus controller (31) is connected to the interchange circuit (10) via the read and write control links (25, 26), to the second interface (38) via a write signal line (45) and the write control link (26), to the counter assembly (32) and to the interrupt controller (35) via the write signal line (45), to the random access memory (36) and to the read only memory (37) via the read control link (25) and to the random access memory via the write control link (26), that the second interface (38) is connected to the interchange circuits via the data bus (LD) and the decoding control link (24) and to the signaling terminals via the reset link (28), that the first interface is connected to the general bus (SYSBUS), that the interrupt circuit (39) is connected to the general bus, to the interrupt controller (35) and to the central memory (MC) and that the scanning module (40) is connected to the direct memory access circuits (4) and to the internal bus access circuits (7) of the signaling terminals, to the access circuits (9) and to the general bus (SYSBUS).

5. A signaling terminal device according to claim 4, characterized in that the first interface (34) comprises a bus controller (CB), a bus arbiter (AB) and an access circuit (CA), that the bus arbiter (AB) and the bus controller (CB) are connected to the microprocessor (33) via an address link (41), that the bus arbiter is connected to the bus controller (CB) and to the access circuit (CA) via an address output line (275) and to the general bus via a priority acknowledgment link (60), a bus request link (61) and a busy link (62), that the bus controller (CB) is connected to the access circuit (CA) via a data enabling line (276) and via a data transfer instruction line (277), and to the general bus via a read link (42), a write link (43) and a write control link (44), and that the access circuit (CA) is connected to the local data bus (BLD), to the local address bus (BLA) and to the general bus via a data link (58) and an address link (59).

6. A signaling terminal device according to claim 4, characterized in that the scanning module (40) of a terminal control unit comprises a first multiplexer (190), the input of which is connected to each signaling terminal of the group of terminals via a request link (11), a second multiplexer (191), the input of which is connected to each signaling terminal via an address output link (13), a first demultiplexer (192), the output of which is connected to each signaling terminal via a ready link (12), and a second demultiplexer (193), the output of which is connected to each signaling terminal via an acknowledgment link (68), that the output of the first multiplexer (190) is connected to the first bistable (194) whose output is connected to the general bus via a bus request link (56) and to an input of a first AND gate (198) the other input of which is connected to a general bus via a priority acknowledgment link (55), the output of said first AND gate being connected to a second bistable (199) whose output is connected to an input of a second AND gate (201), the other input of which is connected via an inverter (202) to the general bus through a busy link (62), the output of said second AND gate being connected to a memory cell (203) whose output is connected to the access circuits (9) via an authorization line (49), that the output of the second multiplexer (191) is connected to an input of a third AND gate (242) whose other input is connected through an inverter (243) to the output of the first multiplexer, the output of said third AND gate being connected to a series shift register (244) whose output is connected to a reset input of the memory cell (203), that the input of the first demultiplexer (192) is connected to the output of a bistable (240) whose input is connected via an acknowledgment link (57) to the general bus and whose reset input is connected via an inverter (241) to the output of the memory cell (203), and that the output of a counter (205) is connected to the enable input of the first and second multiplexers and the first and second demultiplexers.

**Patentansprüche**

1. Signalendgeräteeinrichtung für das CCITT-Signalisationssystem Nr. 7, mit Signalendgeräten, die an ein Vermittlungsnetz einer Fernmeldezentrale angeschlossen sind, und mit Betreibereinheiten (UG) für diese Endgeräte, wobei die Signalendgeräte (TS) Gruppen (1, 2) von Signalendgeräten bilden, die je an eine Betreibereinheit (UG1, UG2) angeschlossen sind, dadurch gekennzeichnet, daß die Betreibereinheiten und die Endgeräte über eine allgemeine Schiene (SYSBUS) an eine Steuereinheit (UC) und an einen Zentralspeicher (MC) angeschlossen sind, die das Niveau 3 der Zentrale bilden, und daß in jeder Gruppe jedes Endgerät mit der allgemeinen Schiene über einen Zugangskreis (9) und mit der Betreibereinheit über einen Austauschkreis (10) verbunden ist, wobei die Zugangs- (9) und Austauschkreise (10) je höchstens zwei Endgeräten zugeordnet sind.

2. Signalendgerätevorrichtung nach Anspruch 1, dadurch gekennzeichnet, daß ein Signalendgerät ein Mikrokontrollgerät (3), einen Sender (5), einen Empfänger (6), einen Zugangskreis (7) zu einer internen Schiene, einen Kanalumschaltkreis (8) und einen Kreis (4) zum direkten Speicherzugang aufweist, daß eine interne Schiene (BI) das Mikrokontrollgerät, den Sender, den Empfänger, den Kreis zum direkten Speicherzugang und den Zugangskreis (9) miteinander verbindet, daß der Sender und der Empfänger mit dem Vermittlungsnetz über eine bidirektionale Verbindung (L), mit dem Zugangskreis zur internen Schiene (7) und dem Kanalumschaltkreis über eine Verbindung (23) verbunden sind, daß der Sender über eine Sendeunterbrechungsverbindung (17) mit dem Mikrokontrollgerät verbunden ist, daß der Empfänger über eine Empfangsunterbrechungsverbindung (18) mit dem Mikrokontrollgerät verbunden ist, daß der Zugangskreis zur internen Schiene (7) mit dem Mikrokontrollgerät, dem Kanalumschaltkreis (8), dem Kreis zum direkten Speicherzugang (4) und über eine Bestätigungsverbindung (68) mit der Betreibereinheit verbunden ist, daß der Kanalumschaltkreis (8) mit dem Mikrokontrollgerät und dem Kreis zum direkten Speicherzugang verbunden ist, daß das Mikrokontrollgerät (3) mit dem Austauschkreis (10) über eine Adressenleitung (19) und eine Datenleitung (20) verbunden ist, daß der Kreis zum direkten Speicherzugang mit dem Zugangskreis (9) über eine Leseleitung (47), eine Schreibleitung (48) und eine Adressenausgangsleitung (13) verbunden ist, daß der Sender, der Empfänger, das Mikrokontrollgerät und der Kreis zum direkten Speicherzugang mit der Betreibereinheit über eine Nullsetzungsverbindung (28) verbunden ist, daß der Kreis zum direkten Speicherzugang mit der Betreibereinheit über eine Anfrageverbindung (11), eine « Bereit »-Verbindung (12) und die Adressenausgangsleitung (13) verbunden ist, daß der Zugangskreis (9) mit der allgemeinen Schiene (SYSBUS) und über eine Freigabeleitung (49) an die Betreibereinheit angeschlossen ist, und daß der Austauschkreis (10) mit der Betreibereinheit über eine Adressenschiene (LA), eine Datenschiene (LD), eine Dekodiersteuerungsverbindung (24), eine Lesesteuerverbindung (25), eine Schreibsteuerverbindung (26), eine « Endgerät bereit »-Verbindung (27) und eine Unterbrecherverbindung (29) verbunden ist.

3. Signalendgerätevorrichtung nach Anspruch 2, dadurch gekennzeichnet, daß der Zugangskreis (9) und der Austauschkreis (10) beiden Endgeräten gemeinsam sind und daß der Austauschkreis (10) einen Austauschspeicher (92) aufweist, der einen mit den beiden Endgeräten über die Adressenleitungen (19) und mit der Betreibereinheit über die Adressenschiene (LA) verbundenen Adressenkreis enthält, wobei der Austauschspeicher (92) eingangsseitig an die beiden Endgeräte über die Datenleitungen (20) und an die Betreibereinheit über die Datenschiene (LD) sowie ausgangsseitig an die beiden Endgeräte über die Datenleitungen (20) und an die Betreibereinheit über die Datenschiene (LD) angeschlossen ist und wobei der Speicher in zwei je einem der Endgeräte reservierte Teile aufgeteilt ist.

4. Signalendgerätevorrichtung nach Anspruch 2, dadurch gekennzeichnet, daß eine Betreibereinheit (UG) einen Mikroprozessor (33), ein Kontrollgerät (31) für die örtliche Schiene, eine erste Schnittstelle (34), eine Zähleranordnung (32), ein Kontrollgerät für Unterbrechungen (35), eine zweite Schnittstelle (38), einen Aktivspeicher (36), einen Festwertspeicher (37), einen Unterbrechungskreis (39) und ein Abtastmodul (40) aufweist, daß der Mikroprozessor (33) über eine örtliche Datenschiene (BLD) an die erste Schnittstelle (34), an die Zähleranordnung (32), ein Kontrollgerät für Unterbrechungen (35), den Aktivspeicher (36), den Festwertspeicher (37) und die zweite Schnittstelle (38), sowie über eine örtliche Adressenschiene (BLA) an die erste Schnittstelle (34), an den Aktivspeicher (36), den Festwertspeicher (37), die zweite Schnittstelle (38), das Kontrollgerät für Unterbrechungen (35) und die Adressenschiene (LA) angeschlossen ist, die die Betreibereinheit mit den Austauschkreisen (10) verbindet, daß der Mikroprozessor (33) an das Kontrollgerät für die örtliche Schiene (31) und an die erste Schnittstelle (34) über eine Zustandsverbindung (41) angeschlossen ist, daß das Kontrollgerät für die örtliche Schiene (31) mit dem Austauschkreis (10) über die Lese- und Schreibsteuerverbindungen (25, 26), an die zweite Schnittstelle (38) über eine Schreibsignalleitung (45) und die Schreibsteuerverbindung (26), an die Zähleranordnung (32) und das Kontrollgerät für Unterbrechungen (35) über die Schreibsignalleitung (45), an den Aktivspeicher (36) und den Festwertspeicher (37) über die Lesesteuerverbindung (25) und an den Aktivspeicher über die Schreibsteuerverbindung (26) angeschlossen ist, daß die zweite Schnittstelle (38) mit den Austauschkreisen über die Datenschiene (LD) und die Dekodiersteuerungsverbindung (24) sowie mit den Signalendgeräten über die Rücksetzungsverbindung (28) verbunden ist, daß die erste Schnittstelle an die allgemeine Schiene (SYSBUS) angeschlossen ist, daß der Unterbrechungskreis (39) an die allgemeine Schiene, an das Kontrollgerät für Unterbrechungen (35) und den zentralen Speicher (MC) angeschlossen ist und daß der Abtastmodul (40) mit den Kreisen zum direkten Speicherzugang (4) und den Zugangskreisen (7) zur internen Schiene der Signalendgeräte, mit den Zugangskreisen (9) und der allgemeinen Schiene (SYSBUS) verbunden ist.

5. Signalendgerätevorrichtung nach Anspruch 4, dadurch gekennzeichnet, daß die erste Schnittstelle (34) ein Schienenkontrollgerät (CB), einen Schienenschiedsrichter (AB) und einen Zugangskreis (CA) aufweist, daß der Schienenschiedsrichter (AB) und das Schienenkontrollgerät (CB) an den Mikroprozessor (33) über eine Adressenverbindung (41) angeschlossen sind, daß der Schienenschiedsrichter mit dem Schienenkontrollgerät (CB) und dem Zugangskreis (CA) über eine Adressenausgangsleitung (275) und mit der allgemeinen Schiene über eine Prioritätsbestätigungsverbindung (60), eine Schienenanfrageverbindung (61) und eine Besetzverbindung (62) verbunden ist, daß das Schienenkontrollgerät (CB) mit dem Zugangskreis (CA) über eine Datenfreigabeleitung (276) und über eine Datenübertragungs-Befehlsleitung (277) sowie mit der allgemeinen Schiene über eine Leseverbindung (42), eine Schreibverbindung (43) und eine Schreibsteuerverbindung (44) verbunden ist, und - daß der Zugangskreis (CA) mit der örtlichen Datenschiene (BLD), mit der örtlichen Adressenschiene (BLA) und der allgemeinen Schiene über eine Datenverbindung (58) und eine Adressenverbindung (59) verbunden ist.

6. Signalendgerätevorrichtung nach Anspruch 4, dadurch gekennzeichnet, daß der Abtastmodul (40) einer Betreibereinheit einen ersten Multiplexer (190), der eingangsseitig an jedes Signalendgerät der Gruppe von Endgeräten über eine Anfrageverbindung (11) angeschlossen ist, einen zweiten Multiplexer (191), der eingangsseitig an jedes Signalendgerät über eine Adressenausgangsverbindung (13) angeschlossen ist, einen ersten Demultiplexer (192), der ausgangsseitig an jedes Signalendgerät über eine « Bereit »-Verbindung (12) angeschlossen ist, und einen zweiten Demultiplexer (193) aufweist, der Ausgangsseitig mit jedem Signalendgerät über eine Bestätigungsverbindung (68) verbunden ist, daß der erste Multiplexer (190) ausgangsseitig an eine erste Kippstufe (194) angeschlossen ist, die ihrerseits ausgangsseitig zur allgemeinen Schiene über eine Schienenanfrageverbindung (56) und zu einem Eingang eines ersten UND-Tors (198) führt, dessen anderer Eingang an die allgemeine Schiene über eine Prioritätsbestätigungsverbindung (55) angeschlossen ist, wobei das erste UND-Tor ausgangsseitig an eine zweite Kippstufe (199) führt, die ausgangsseitig an einen Eingang eines zweiten UND-Tors (201) angeschlossen ist, dessen anderer Eingang über einen Inverter (202) durch eine Besetztverbindung (62) an die allgemeine Schiene angeschlossen ist, während das zweite UND-Tor ausgangsseitig an einen Speicherpunkt (203) führt, der ausgangsseitig an die Zugangskreise (9) über eine Freigabeleitung (49) angeschlossen ist, daß der zweite Multiplexer (191) ausgangsseitig an einen Eingang eines dritten UND-Tors (242) führt, dessen anderer Eingang über einen Inverter (243) an den Ausgang des ersten Multiplexers angeschlossen ist, wobei dieses dritte UND-Tor ausgangsseitig zu einem Serienschieberegister (244) führt, das ausgangsseitig an den Nullsetzungseingang des Speicherpunkts (203) angeschlossen ist, daß der erste Demultiplexer (192) eingangsseitig an den Ausgang einer Kippstufe (240) angeschlossen ist, deren Eingang über eine Bestätigungsverbindung (57) an die allgemeine Schiene führt, während ein Nullsetzungseingang über einen Inverter (241) an den Ausgang des Speicherpunkts (203) angeschlossen ist, und daß ein Zähler (205) mit seinem Ausgang an einen Freigabeeingang des ersten Multiplexers, des zweiten Multiplexers, des ersten Demultiplexers, des zweiten Multiplexers, des ersten Demultiplexers und des zweiten Demultiplexers angeschlossen ist.

FIG.1

# FIG. 2

FIG.3

## FIG.4

## FIG.5

# FIG.6

# FIG.7

# FIG.8

## FIG.9

## FIG.10

## FIG.11

## FIG.12

## FIG.13

8

# FIG.14

SYSBUS

FIG.15

# FIG.16

# FIG.17

# FIG. 18

# FIG.19

| # | | | | | |
|---|---|---|---|---|---|
| 0 | | | | | |
| 1 | BIR-E | | NSR-E | | |
| 2 | EPTSE | /////// | | FM | DM | PBE |
| 3 | BIA-E | NSA-E | | |
| 4 | | L0 | | |
| 5 | | L1 | | |
| 6 | | AD0 | | |
| 7 | | AD1 | | |
| 8 | /////// | | PZR |
| 9 | | ADBL0 | | |
| 10 | | ADBL1 | | |
| 11 | ITV | ITCR | /////// | ACN |
| 12 | /////// | | TSE | PM |
| 13 | /// | NSA-R | |
| 14 | | L0/1 | |
| 15 | NBZU | /////// | L1/1 |
| 16 | PZON | |
| 17 | /////// | | TSE | PM |
| 18 | /// | NSA-R | |
| 19 | | L0/2 | |
| 20 | NBZU | /////// | L1/2 |
| 21 | PZON | |
| 22 | BIR-R | NSR-R | |
| 59 | | NSA-P | |
| 60 | BMR | BRET | /////// | ISTTS | BVS | ISTEA |
| 61 | SA | /////// | OREC | OSTTS | CD |
| 62 | | OCTFOT | |
| 63 | /////// | |